(19) Europäisches Patentamt
European Patent Office
Office européen des brevets

(11) EP 4 604 215 A1

(12) EUROPEAN PATENT APPLICATION
published in accordance with Art. 153(4) EPC

(43) Date of publication:
20.08.2025 Bulletin 2025/34

(51) International Patent Classification (IPC):
H01M 4/58 (2010.01)        H01M 4/36 (2006.01)
H01M 10/0525 (2010.01)     C01B 25/45 (2006.01)

(21) Application number: 23942606.7

(22) Date of filing: 27.12.2023

(86) International application number:
PCT/CN2023/142497

(87) International publication number:
WO 2025/137961 (03.07.2025 Gazette 2025/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Beijing Easpring Material Technology
Co., Ltd.
Beijing 100160 (CN)

(72) Inventors:
• HAN, Yongqiang
Fengtai District, Beijing 100160 (CN)

• TIAN, Xinmin
Fengtai District, Beijing 100160 (CN)
• ZHANG, Xuequan
Fengtai District, Beijing 100160 (CN)
• LIU, Yafei
Fengtai District, Beijing 100160 (CN)
• CHEN, Yanbin
Fengtai District, Beijing 100160 (CN)

(74) Representative: Nederlandsch Octrooibureau
P.O. Box 29720
2502 LS The Hague (NL)

(54) LITHIUM IRON PHOSPHATE POSITIVE ELECTRODE MATERIAL AND PREPARATION METHOD THEREFOR, AND LITHIUM-ION BATTERY

(57) The present application relates to the technical field of preparation of a lithium-ion cathode material, and discloses a lithium iron phosphate cathode material, a preparation method thereof, and a lithium-ion battery. Based on X-ray Diffraction (XRD) test, the lithium iron phosphate cathode material has diffraction characteristic peaks at $2\theta_{A1}=29.4°$ to $29.6°$, $2\theta_{A2}=29.8°$ to $30°$, and $2\theta_{A3}=43.8°$ to $43.9°$. As the lithium iron phosphate cathode material has specific diffraction characteristic peaks based on XRD test, the lithium iron phosphate cathode material can have a high pallet density, thereby significantly improving electrochemical performances such as capacity and cycle performance of the lithium-ion battery assembled from the lithium iron phosphate cathode material.

FIG. 3

# EP 4 604 215 A1

**Description**

## FIELD

The present disclosure relates to the technical field of preparation of lithium-ion cathode materials, and more particularly, to a lithium iron phosphate cathode material, a preparation method thereof, and a lithium-ion battery.

## BACKGROUND

Lithium-ion batteries are a kind of green secondary battery with outstanding advantages such as high voltage, high energy density, good cycle performance, insignificant self-discharge, and less memory effect. The lithium-ion batteries, once successfully developed in the 1990s, have been rapidly applied and advanced. In recent years, of the lithium-ion batteries have been applied in increasingly wider range, including energy storage power systems for hydropower, thermal power, wind power and solar power stations, as well as power tools, electric bicycles, electric motorcycles, electric vehicles, military equipment, aerospace, and other fields. Lithium iron phosphate cathode material has become one of the most promising cathode materials for the lithium-ion battery, due to its advantages such as stable structure, abundant resources, long cycle life, good safety, environmental friendliness, and theoretical capacity of up to 170 mAh/g.

Many methods are known for preparing the lithium iron phosphate cathode material. These methods can be roughly divided into a liquid phase method and a solid phase method. The liquid phase method includes low-temperature synthesis methods such as a chemical precipitation method, a hydrothermal method, a sol-gel method, and the like. The solid phase method includes a high temperature solid phase sintering method, a carbon thermal reduction method, a microwave sintering method, and the like. Regardless of which synthesis method is practiced in industrialized production, the cost, difficulty of process control, and performance should be taken into consideration. The quality of the lithium iron phosphate cathode materials has a direct impact on the performances of the battery such as energy density, cycle life, safety, and the like.

With the rapid development of the energy storage and power battery industries, new demands and challenges are put forward for the lithium iron phosphate cathode materials. Currently, extensive research have conducted on high-density lithium iron phosphate materials and their precursor, i.e., iron phosphate materials. CN116553507A discloses a high-compacted lithium iron phosphate material and a densification treatment process for precursor thereof. The process includes: conveying a precursor material of lithium iron phosphate to a plasma flame through an inert gas atmosphere, performing melting treatment, to form spherical single crystals; placing the crystals in a graphite sintering furnace, heating and sintering, and then introducing superheated water vapor; and in a heat-insulating state, introducing a carbon-containing gas, to form a thin carbon coating layer on the surface of the spherical single crystal, and cooling, to obtain a high-density lithium iron phosphate material. This method has complex preparation processes, which are difficult to control, consume a lot of energy, and lack uniformity and stability for the product.

CN112408351A discloses a method for preparing high-compacted iron phosphate and lithium iron phosphate. A trivalent iron source slurry is prepared and divided into two parts, one of which is added with a mixed solution of phosphoric acid and liquid alkali for reaction until the mixed slurry appears white, and the other one of which is added with the mixed slurry for reaction; and performing washing, filtering, drying, and roasting, to obtain high-density iron phosphate. The preparation processes of such a method are difficult to control. At the same time, a pallet density of the lithium iron phosphate material cannot be substantially improved by simply adjusting the stacking mode and particle size distribution of the secondary particles of iron phosphate.

## SUMMARY

The technical problem to be solved by the present disclosure is to overcome the deficiencies of the related art. The present disclosure provides a lithium iron phosphate cathode material, a preparation method thereof, and a lithium-ion battery. Based on X-ray Diffraction (XRD) test, the lithium iron phosphate cathode material has specific diffraction characteristic peaks, enabling the lithium iron phosphate cathode material to have a high pallet density, thereby significantly improving electrochemical performances such as capacity and cycle performance of the lithium-ion battery assembled from the lithium iron phosphate cathode material.

A first aspect of the present disclosure provides a lithium iron phosphate cathode material. Based on XRD test, the lithium iron phosphate cathode material has diffraction characteristic peaks at $2\theta_{A1}$=29.4° to 29.6°, $2\theta_{A2}$=29.8° to 30°, and $2\theta_{A3}$=43.8° to 43.9°.

A second aspect of the present disclosure provides a preparation method of a lithium iron phosphate cathode material. The preparation method includes: (1) mixing an iron phosphate precursor, a lithium source, a carbon source, an optional metal source M, and an optional Mn source with a liquid medium, grinding the mixture into slurry, and drying the slurry, to obtain a dried material; (2) performing a calcination treatment on the dried material under a protective atmosphere, to obtain a sintered material; and (3) crushing and sieving the sintered material, to obtain the lithium iron phosphate cathode material. Based on XRD test, the iron phosphate precursor has diffraction characteristic peaks at $2\theta_{a1}$=16.2° to 16.9°, $2\theta_{a2}$=27.3° to 28.1°, $2\theta_{a3}$=29° to 29.7°, and $2\theta_{a4}$=30.2° to 30.9°. Based on XRD test, the iron phosphate precursor has diffraction characteristic peaks at $2\theta_{b1}$=20° to 20.7°, $2\theta_{b2}$=21.5° to 22.2°, $2\theta_{b3}$=23.4° to 24°, and $2\theta_{b4}$=25.5° to 26.2°.

For the iron phosphate precursor, an integral area $A(2\theta_{ai})$ of a diffraction characteristic peak at $2\theta_{ai}$ and an integral area $A(2\theta_{bj})$ of a diffraction characteristic peak at $2\theta_{bj}$ satisfy: $\frac{A(2\theta ai)}{A(2\theta ai)+A(2\theta bj)}=1\%$ to 3%, where i is an integer ranging from 1 to 4, and j is an integer ranging from 1 to 4

A third aspect of the present disclosure provides a lithium iron phosphate cathode material prepared by the above-mentioned preparation method.

A fourth aspect of the present disclosure provides a lithium-ion battery. The lithium-ion battery includes the above-mentioned lithium iron phosphate cathode material.

Through the above-mentioned technical solutions, the lithium iron phosphate cathode material, the preparation method and use thereof, and the lithium-ion battery according to the present disclosure have the following beneficial effects.

The lithium iron phosphate cathode material according to the present disclosure has specific diffraction characteristic peaks based on XRD test, allowing the cathode material to have a high pallet density. When it is used in the lithium-ion batteries, the electrochemical performances of the lithium-ion batteries can be effectively improved, and the lithium-ion batteries can exhibit higher capacity and energy efficiency, lower internal resistance, and better cycle performance.

Further, the lithium iron phosphate cathode material according to the present disclosure has a low content of $Fe_2P$, which can further increase capacity and energy density of the cathode material and reduce side reactions with the electrolyte, thereby prolonging the service life of a lithium-ion battery containing the cathode material and improving the safety of the lithium-ion battery.

Further, the lithium iron phosphate cathode material according to the present disclosure includes a matrix and a carbon coating layer coated on a surface of the matrix. The carbon coating layer is uniformly coated on the surface of the matrix, thereby further improving the capacity, energy efficiency, and cycle performance of the lithium-ion battery containing the cathode material, and further reducing the internal resistance.

Specifically, the lithium iron phosphate cathode material according to the present disclosure has a high pallet density of 2.63 g/cm$^3$. In this way, for the lithium-ion battery containing the cathode material, 0.1C discharge specific capacity reaches 160 mAh/g, the capacity retention rate after 200 cycles at room temperature is 97%, and 1C energy efficiency reaches 95%, showing excellent electrochemical performance.

In addition, the present disclosure provides a corresponding relationship between the lattice parameter c/a value of the iron phosphate precursor and the pallet density of the lithium iron phosphate, which provides a basis for the development of raw materials and the design of products.

In the preparation method of the lithium iron phosphate cathode material according to the present disclosure, on the one hand, by using a precursor material with a specific XRD structure, the iron phosphate precursor has certain structural defects, which can play the role of a flux agent in the sintering process of the precursor and reduce the sintering temperature. On the other hand, by optimizing the conditions for the grinding, spraying, and sintering process, a lithium iron phosphate cathode material with high pallet density and good electrochemical performance is obtained.

In addition, the preparation method of the lithium iron phosphate precursor of the present disclosure only optimizes the process parameters without requiring any adjustment to the existing production line. The entire process production is non-toxic and harmless, the process is simple, the raw materials are easily available, and the device requirements are low. The preparation method is easy to promote and apply, and can be widely used in the industrial production of the lithium iron phosphate cathode materials.

**BRIEF DESCRIPTION OF THE DRAWINGS**

FIG. 1 is an XRD pattern of an iron phosphate precursor prepared in Preparation Example 1 of the present disclosure;
FIG. 2 is an SEM image of an iron phosphate precursor prepared in Preparation Example 1 of the present disclosure;
FIG. 3 is XRD patterns of lithium iron phosphate cathode materials prepared in Example 1 and Example 2 of the present disclosure;
FIG. 4 is an SEM image of a lithium iron phosphate cathode material prepared in Example 1 of the present disclosure; and
FIG. 5 is a graph illustrating charge and discharge performance of lithium-ion batteries assembled from lithium iron phosphate cathode materials of Example 1 and Example 2.

**DETAILED DESCRIPTION**

The endpoints of the ranges and any values disclosed herein shall not limited to the exact range or value, and those ranges or values should be understood to include values close to those ranges or values. For numerical ranges, endpoints of the respective ranges, an endpoint of respective ranges and an individual point value, and individual point values may be combined with each other to obtain one or more new numerical ranges, which should be deemed to be specifically disclosed herein.

A first aspect of the present disclosure provides a lithium iron phosphate cathode material. Based on X-ray Diffraction (XRD) test, the lithium iron phosphate cathode material has diffraction characteristic peaks at $2\theta_{A1}$=29.4° to 29.6°, $2\theta_{A2}$=29.8° to 30°, and $2\theta_{A3}$=43.8° to 43.9°.

In the present disclosure, when the lithium iron phosphate cathode material has a specific diffraction characteristic peak at a specific $2\theta$ based on the XRD test, the cathode material can have a high pallet density. When the lithium iron phosphate cathode material is used in a lithium-ion battery, electrochemical performances of the lithium-ion battery can be effectively improved, allowing the lithium-ion battery to exhibit higher capacity and energy efficiency, lower internal resistance, and better cycle performance.

Further, based on XRD test, the lithium iron phosphate cathode material has diffraction characteristic peaks at $2\theta_{B1}$=25.4° to 25.5°, $2\theta_{B2}$=35.9° to 36°, and $2\theta_{B3}$=60.7° to 60.8°.

According to the present disclosure, for the lithium iron phosphate cathode material, a ratio of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ satisfies $0.25 \leq I(2\theta_{A2})/I(2\theta_{B3}) \leq 0.27$.

In the present disclosure, for the cathode material, when the ratio of the peak intensity $I(2\theta_{A2})$ of the diffraction characteristic peak at $2\theta_{A2}$ to the peak intensity $I(2\theta_{B3})$ of the diffraction characteristic peak at $2\theta_{B3}$ is within the above-mentioned range, the cathode material can exhibit a higher pallet density at a relatively low temperature.

In the present disclosure, for the cathode material, the ratio of the peak intensity $I(2\theta_{A2})$ of the diffraction characteristic peak at $2\theta_{A2}$ to the peak intensity $I(2\theta_{B3})$ of the diffraction characteristic peak at $2\theta_{B3}$ satisfies $0.25 \leq I(2\theta_{A2})/I(2\theta_{B3}) \leq 0.27$. For example, the ratio can be 0.250, 0.251, 0.252, 0.253, 0.254, 0.255, 0.256, 0.257, 0.258, 0.259, 0.260, 0.261, 0.262, 0.263, 0.264, 0.265, 0.266, 0.267, 0.268, 0.269, 0.27, or in a range consisting of any two of these values, and preferably, $0.26 \leq I(2\theta_{A2})/I(2\theta_{B3}) \leq 0.27$.

According to the present disclosure, the cathode material includes a matrix and a carbon coating layer coated on a surface of the matrix. The matrix has a composition represented by Formula I: $Li_{1+a}Fe_bM_cMn_d(PO_4)_{1-2w}(P_2O_7)_w$ Formula I, where: $-0.1 \leq a \leq 0.1$, $0 \leq b \leq 1$, $0 \leq c \leq 0.5$, $0 \leq d \leq 1$, and $0.03 \leq w \leq 0.09$; and M is selected from at least one of La, Ce, Cr, Mo, Ca, Hf, Ti, Fe, Zn, Y, Zr, W, Nb, Sm, Co, Ni, V, Mg, Na, B, and Al.

In the present disclosure, the lithium iron phosphate cathode material according to the present disclosure includes the matrix and the carbon coating layer coated on the surface of the matrix, and the carbon coating layer is uniformly coated on the surface of the matrix. In this way, the capacity, energy efficiency, and cycle performance of the lithium-ion battery containing the cathode material can be improved, and the internal resistance can be further reduced.

Further, M is selected from at least one of Al, Zr, W, Fe, Co, V, and Ti.

In the present disclosure, $-0.1 \leq a \leq 0.1$, $0 \leq b \leq 1$, $0 \leq c \leq 0.5$, $0 \leq d \leq 1$, and $0.03 \leq w \leq 0.09$. For example, $a$ can be -0.09, -0.08, -0.07, -0.06, -0.05, -0.04, -0.03, -0.02, -0.01, 0, 0.01, 0.02, 0.03, 0.04, 0.05, 0.06, 0.07, 0.08, 0.09, 0.1, and in a range consisting of any two of these values, and preferably, $-0.05 \leq a \leq 0.05$. For example, b can be 0, 0.1, 0.2, 0.3, 0.4, 0.5, 0.6, 0.7, 0.8, 0.9, 1, or in a range consisting of any two of these values, and preferably, $0.5 \leq b \leq 1$. For example, $c$ can be 0, 0.001, 0.002, 0.003, 0.004, 0.005, 0.006, 0.007, 0.008, 0.009, 0.01, 0.011, 0.012, 0.013, 0.014, 0.015, 0.016, 0.017, 0.018, 0.019, 0.02, 0.03, 0.04, 0.05, 0.06, 0.07, 0.08, 0.09, 0.1, 0.15, 0.2, 0.25, 0.3, 0.35, 0.4, 0.45, 0.5, or in a range consisting of any two of these values, and preferably, $0.001 \leq c \leq 0.1$. For example, $d$ can be 0, 0.1, 0.2, 0.3, 0.4, 0.5, or in a range consisting of any two of these values, and preferably, $0 \leq d \leq 0.5$. For example, $w$ can be 0.03, 0.031, 0.032, 0.033, 0.034, 0.035, 0.036, 0.037, 0.038, 0.039, 0.04, 0.041, 0.042, 0.043, 0.044, 0.045, 0.046, 0.047, 0.048, 0.049, 0.05, 0.051, 0.052, 0.053, 0.054, 0.055, 0.056, 0.057, 0.058, 0.059, 0.06, 0.061, 0.062, 0.063, 0.064, 0.065, 0.066, 0.067, 0.068, 0.069, 0.07, 0.071, 0.072, 0.073, 0.074, 0.075, 0.076, 0.077, 0.078, 0.079, 0.08, 0.081, 0.082, 0.083, 0.084, 0.085, 0.086, 0.087, 0.088, 0.089, 0.09, or in a range consisting of any two of these values, and preferably, $0.04 \leq w \leq 0.08$.

According to the present disclosure, based on a total weight of the cathode material, a content of the carbon coating layer ranges from 0.5 wt% to 2wt%.

In the present disclosure, the content of the carbon coating layer ranges from 0.5 wt% to 2wt%, for example, it can be 0.5 wt%, 0.6 wt%, 0.7 wt%, 0.8 wt%, 0.9 wt%, 1 wt%, 1.1 wt%, 1.2 wt%, 1.3 wt%, 1.4 wt%, 1.5 wt%, 1.6 wt%, 1.7 wt%, 1.8 wt%, 1.9 wt%, 2 wt%, or in a range consisting of any two of these values. Preferably, based on the total weight of the cathode material, the content of the carbon coating layer ranges from 1 wt% to 1.5 wt%.

According to the present disclosure, the lithium iron phosphate cathode material has a secondary particle structure formed by primary particles. The primary particles have a median particle size $D_{50}$ ranging from 0.2 μm to 2 μm.

In the present disclosure, the median particle size $D_{50}$ of the primary particles ranges from 0.2 μm to 2 μm, for example, it can be 0.2 μm, 0.3 μm, 0.4 μm, 0.5 μm, 0.6 μm, 0.7 μm, 0.8 μm, 0.9 μm, 1 μm, 1.1 μm, 1.2 μm, 1.3 μm, 1.4 μm, 1.5 μm, 1.6 μm, 1.7 μm, 1.8 μm, 1.9 μm, 2 μm, or in a range consisting of any two of these values. Preferably, the median particle size $D_{50}$ of the primary particles ranges from 0.5 μm to 1.5 μm.

According to the present disclosure, the lithium iron phosphate cathode material has a pallet density ranging from 2.5 g/cm$^3$ to 2.7 g/cm$^3$.

In the present disclosure, when the pallet density of the lithium iron phosphate cathode material is within the above-mentioned range, the pallet density is relatively high. In this way, contact internal resistance between material particles can be further reduced, and the energy density of the material can be enhanced.

In the present disclosure, the pallet density of the lithium iron phosphate cathode material ranges from 2.5 g/cm$^3$ to 2.7 g/cm$^3$, for example, it can be 2.5 g/cm$^3$, 2.51 g/cm$^3$, 2.52 g/cm$^3$, 2.53 g/cm$^3$, 2.54 g/cm$^3$, 2.55 g/cm$^3$, 2.56 g/cm$^3$, 2.57 g/cm$^3$, 2.58 g/cm$^3$, 2.59 g/cm$^3$, 2.6 g/cm$^3$, 2.61 g/cm$^3$, 2.62 g/cm$^3$, 2.63 g/cm$^3$, 2.64 g/cm$^3$, 2.65 g/cm$^3$, 2.66 g/cm$^3$, 2.67 g/cm$^3$, 2.68 g/cm$^3$, 2.69 g/cm$^3$, 2.7 g/cm$^3$, or in a range consisting of any two of these values. Preferably, the pallet density of the lithium iron phosphate cathode material ranges from 2.55 g/cm$^3$ to 2.65 g/cm$^3$.

According to the present disclosure, the lithium iron phosphate cathode material has a tap density ranging from 0.6 g/cm$^3$ to 1.1 g/cm$^3$.

In the present disclosure, when the tap density of the lithium iron phosphate cathode material is within the above-mentioned range, obvious gradation exists between particles, and processing performance of the material can be improved.

In the present disclosure, the tap density of the lithium iron phosphate cathode material ranges from 0.6 g/cm$^3$ to 1.1 g/cm$^3$, for example, it can be 0.6 g/cm$^3$, 0.61 g/cm$^3$, 0.62 g/cm$^3$, 0.63 g/cm$^3$, 0.64 g/cm$^3$, 0.65 g/cm$^3$, 0.66 g/cm$^3$, 0.67 g/cm$^3$, 0.68 g/cm$^3$, 0.69 g/cm$^3$, 0.7 g/cm$^3$, 0.71 g/cm$^3$, 0.72 g/cm$^3$, 0.73 g/cm$^3$, 0.74 g/cm$^3$, 0.75 g/cm$^3$, 0.76 g/cm$^3$, 0.77 g/cm$^3$, 0.78 g/cm$^3$, 0.79 g/cm$^3$, 0.8 g/cm$^3$, 0. 81g/cm$^3$, 0.82 g/cm$^3$, 0.83 g/cm$^3$, 0.84 g/cm$^3$, 0.85 g/cm$^3$, 0.86 g/cm$^3$, 0.87 g/cm$^3$, 0.88 g/cm$^3$, 0.89 g/cm$^3$, 0.9 g/cm$^3$, 0.91 g/cm$^3$, 0.92 g/cm$^3$, 0.93 g/cm$^3$, 0.94 g/cm$^3$, 0.95 g/cm$^3$, 0.96 g/cm$^3$, 0.97 g/cm$^3$, 0.98 g/cm$^3$, 0.99 g/cm$^3$, 1 g/cm$^3$, 1.1 g/cm$^3$, or in a range consisting of any two of these values. Preferably, the tap density of the lithium iron phosphate cathode material ranges from 0.7 g/cm$^3$ to 1 g/cm$^3$.

According to the present disclosure, the lithium iron phosphate cathode material has a specific surface area ranging from 8 m$^2$/g to 20 m$^2$/g.

In the present disclosure, the specific surface area of the lithium iron phosphate cathode material ranges from 8 m$^2$/g to 20 m$^2$/g, for example, it can be 8 m$^2$/g, 9 m$^2$/g, 10 m$^2$/g, 11 m$^2$/g, 12 m$^2$/g, 13 m$^2$/g, 14 m$^2$/g, 15 m$^2$/g, 16 m$^2$/g, 17 m$^2$/g, 18 m$^2$/g, 19 m$^2$/g, 20 m$^2$/g, or in a range consisting of any two of these values. Preferably, the specific surface area of the lithium iron phosphate cathode material ranges from 10 m$^2$/g to 15 m$^2$/g.

According to the present disclosure, the lithium iron phosphate cathode material has a volume resistivity ranging from 1 Ω·cm to 100 Ω·cm.

In the present disclosure, the volume resistivity of the lithium iron phosphate cathode material ranges from 1 Ω·cm to 100 Ω·cm, for example, it can be 1 Ω·cm, 2 Ω·cm, 3 Ω·cm, 4 Ω·cm, 5 Ω·cm, 6 Ω·cm, 7 Ω·cm, 8 Ω·cm, 9 Ω·cm, 10 Ω·cm, 12 Ω·cm, 14 Ω·cm, 16 Ω·cm, 18 Ω·cm, 20 Ω·cm, 22 Ω·cm, 24 Ω·cm, 26 Ω·cm, 28 Ω·cm, 30 Ω·cm, 35 Ω·cm, 40 Ω·cm, 45 Ω·cm, 50 Ω·cm, 55 Ω·cm, 60 Ω·cm, 65 Ω·cm, 70 Ω·cm, 75 Ω·cm, 80 Ω·cm, 85 Ω·cm, 90 Ω·cm, 95 Ω·cm, 100 Ω·cm, or in a range consisting of any two of these values. Preferably, the volume resistivity of the lithium iron phosphate cathode material ranges from 10 Ω·cm to 60 Ω·cm.

According to the present disclosure, a content of $Fe_2P$ of the lithium iron phosphate cathode material is lower than or equal to 100 ppb.

In the present disclosure, the content of $Fe_2P$ in the lithium iron phosphate cathode material is relatively low, which can further improve the capacity and energy density of the cathode material and reduce side reactions with the electrolyte, thereby prolonging the service life of a lithium-ion battery containing the cathode material and improving the safety of the lithium-ion battery.

In the present disclosure, the content of $Fe_2P$ of the lithium iron phosphate cathode material is ≤ 100 ppb, for example, it can be 100 ppb, 99 ppb, 98 ppb, 97 ppb, 96 ppb, 95 ppb, 94 ppb, 93 ppb, 92 ppb, 91 ppb, 90 ppb, 85 ppb, 80 ppb, 75 ppb, 70 ppb, 65 ppb, 60 ppb, 55 ppb, 50 ppb, 45 ppb, 40 ppb, 35 ppb, 30 ppb, 25 ppb, 20 ppb, 15 ppb, 10 ppb, 5 ppb, 0 ppb, or in a range consisting of any two of these values. Preferably, the content of $Fe_2P$ of the lithium iron phosphate cathode material is ≤90 ppb.

According to the present disclosure, the content of $Fe_2P$, the volume resistivity, and the pallet density of the lithium iron phosphate cathode material satisfy: MI=77.13PD-0.03R-107.7, where: R represents the volume resistivity of the lithium iron phosphate cathode material in Ω·cm; PD represents the pallet density of the lithium iron phosphate cathode material in g/cm$^3$; and MI represents the content of $Fe_2P$ of the lithium iron phosphate cathode material in ppb.

In the present disclosure, when the content of $Fe_2P$, the volume resistivity, and the pallet density of the cathode material satisfy the above-mentioned relationship, a cathode material with a high pallet density can be prepared at a relatively low temperature, and the cathode material has good electrical performances.

According to the present disclosure, the pallet density of the lithium iron phosphate cathode material and a value of the peak intensity $I(2\theta_{A2})$ of the diffraction characteristic peak at $2\theta_{A2}$ of the cathode material measured by XRD satisfy: $PD = 0.084\,I(2\theta_{A2}) + 0.377$, where: PD represents the pallet density of the lithium iron phosphate cathode material in g/cm$^3$; and $I(2\theta_{A2})$ represents the peak intensity $I(2\theta_{A2})$ of the diffraction characteristic peak at $2\theta_{A2}$ in an XRD diffraction pattern of the lithium iron phosphate cathode material.

In the present disclosure, the inventors have found through research that, when the pallet density of the lithium iron phosphate cathode material and the peak intensity $I(2\theta_{A2})$ of the diffraction characteristic peak at $2\theta_{A2}$ of the cathode material satisfy the above-mentioned relationship, the pallet density of the cathode material can be further identified by regulating the peak intensity of the diffraction characteristic peak at $2\theta_{A2}$.

A second aspect of the present disclosure provides a preparation method of a lithium iron phosphate cathode material. The preparation method includes: (1) mixing an iron phosphate precursor, a lithium source, a carbon source, an optional metal source M, and an optional Mn source with a liquid medium, grinding the mixture into slurry, and drying the slurry, to obtain a dried material; (2) performing a calcination treatment on the dried material under a protective atmosphere, to obtain a sintered material; and (3) crushing and sieving the sintered material, to obtain the lithium iron phosphate cathode material. Based on XRD test, the iron phosphate precursor has diffraction characteristic peaks at $2\theta_{a1}=16.2°$ to $16.9°$, $2\theta_{a2}=27.3°$ to $28.1°$, $2\theta_{a3}=29°$ to $29.7°$, and $2\theta_{a4}=30.2°$ to $30.9°$; and based on XRD test, the iron phosphate precursor has diffraction characteristic peaks at $2\theta_{b1}=20°$ to $20.7°$, $2\theta_{b2}=21.5°$ to $22.2°$, $2\theta_{b3}=23.4°$ to $24°$, and $2\theta_{b4}=25.5°$ to $26.2°$. For the iron phosphate precursor, an integral area $A(2\theta_{ai})$ of a diffraction characteristic peak at $2\theta_{ai}$ and an integral area $A(2\theta_{bj})$ of a diffraction characteristic peak at $2\theta_{bj}$ satisfy: $\dfrac{A(2\theta ai)}{A(2\theta ai)+A(2\theta bj)}=1\%$ to 3%, where i is an integer ranging from 1 to 4, and j is an integer ranging from 1 to 4.

In the present disclosure, by using a precursor material with a specific XRD structure, the iron phosphate precursor has certain structural defects, which can play the role of a flux agent in the sintering process of the precursor, thereby increasing the pallet density of the prepared lithium iron phosphate cathode material while lowering the sintering temperature.

Further, in the iron phosphate precursor, $\dfrac{A(2\theta ai)}{A(2\theta ai)+A(2\theta bj)}\dfrac{A(2\theta ai)}{A(2\theta ai)+A(2\theta bj)}=1\%$ to 2%.

According to the present disclosure, lattice parameters of an a-axis and a c-axis of the iron phosphate precursor measured by XRD satisfy: $2.231 \leq c/a \leq 2.2326$.

In the present disclosure, when the iron phosphate precursor having the above-mentioned specific value of lattice parameter $c/a$ is selected, a higher pallet density at a lower temperature can be achieved while reducing the content of iron phosphide in the lithium iron phosphate. In this way, the capacity and energy density of the cathode material made from the precursor can be enhanced, and the side reactions with the electrolyte can be reduced, thereby prolonging the service life of a lithium-ion battery containing the cathode material and improving the safety of the lithium-ion battery.

In the present disclosure, the iron phosphate precursor has a crystal structure of hexagonal system and a space group of $P3_121$.

In the present disclosure, point group structure of the iron phosphate precursor presents an equivalent arrangement on the a-axis and the b-axis. The c-axis a vertical crystal axis.

In the present disclosure, the lattice parameters of the a-axis and c-axis of the iron phosphate precursor measured by XRD satisfy: $2.2306 \leq c/a \leq 2.2330$, for example, $c/a$ can be 2.2306, 2.2307, 2.2308, 2.2309, 2.231, 2.2311, 2.2312, 2.2313, 2.2314, 2.2315, 2.2316, 2.2317, 2.2318, 2.2319, 2.232, 2.2321, 2.2322, 2.2323, 2.2324, 2.2325, 2.2326, 2.2327, 2.2328, 2.2329, 2.2330, or in a range consisting of any two of these values. Preferably, $2.231 \leq c/a \leq 2.2326$.

According to the present disclosure, the iron phosphate precursor has a composition represented by Formula II: $(Fe_{1-y}M_yPO_4)_{1-6x}[Fe_4(P_2O_7)_3]_x$ Formula II, where: $0.01 \leq x \leq 0.03$, $0 \leq y \leq 0.1$, and M is selected from at least one of Al, Mg, Ca, Sr, V, Cr, Y, Mo, Nb, W, La, Sm, Co, Ni, Cu, Zn, Zr, and Ti.

Further, $0.01 \leq x \leq 0.02$, $0 < y \leq 0.05$, and M is selected from at least one of Al, Mg, Co, Ni, Cu, Zn, Zr, and Ti.

According to the present disclosure, in the iron phosphate precursor, a molar ratio n(Me)/n(P) of a metal element to element phosphorus ranges from 0.96 to 0.98.

In the present disclosure, when the molar ratio of the metal element to element phosphorus in the iron phosphate precursor is within the above-mentioned range, the precursor has certain structural defects, and the excess phosphorus acts as a flux agent, thereby increasing the pallet density of the prepared lithium iron phosphate cathode material while lowering the sintering temperature.

Further, in the iron phosphate precursor, the molar ratio n(Me)/n(P) of the metal element to element phosphorus ranges from 0.96 to 0.97.

According to the present disclosure, the iron phosphate precursor has a median particle size $D_{50}$ ranging from 1 $\mu$m to 25 $\mu$m.

In the present disclosure, when the median particle size of the iron phosphate precursor is within the above-mentioned range, it is beneficial to improve grinding efficiency during the preparation of the cathode material, thereby reducing the energy consumption.

In the present disclosure, the median particle size $D_{50}$ of the iron phosphate precursor ranges from 1 $\mu$m to 25 $\mu$m, for example, it can be 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 15 $\mu$m, or in a range consisting of any two of these values. Preferably, the median particle size $D_{50}$ of the iron phosphate precursor ranges from 2 $\mu$m to 20 $\mu$m.

According to the present disclosure, the primary particles of the iron phosphate precursor have a size ranging from 20 nm to 200 nm.

In the present disclosure, when the size of the primary particles of the iron phosphate precursor is within the above-mentioned range, the primary particles are uniform and dense, which is conducive to obtaining a high-density lithium iron phosphate cathode material.

In the present disclosure, the size of the primary particles of the iron phosphate precursor ranges from 20 nm to 200 nm, for example, it can be 20 nm, 25 nm, 30 nm, 35 nm, 40 nm, 45 nm, 50 nm, 55 nm, 60 nm, 65 nm, 70 nm, 80 nm, 85 nm, 90 nm, 95 nm, 100 nm, 110 nm, 120 nm, 130 nm, 140 nm, 150 nm, 160 nm, 170 nm, 180 nm, 190 nm, 200 nm, or in a range consisting of any two of these values. Preferably, the size of the primary particles of the iron phosphate precursor ranges from 50 nm to 150 nm.

According to the present disclosure, the iron phosphate precursor has a tap density ranging from 0.8 g/cm$^3$ to 1.3 g/cm$^3$.

In the present disclosure, when the tap density of the iron phosphate precursor is within the above-mentioned range, it indicates that the precursor has a relatively high density, which is beneficial to further improve the pallet density of the lithium iron phosphate cathode material.

In the present disclosure, the tap density of the iron phosphate precursor ranges from 0.8 g/cm$^3$ to 1.3 g/cm$^3$, for example, it can be 0.8 g/cm$^3$, 0.81 g/cm$^3$, 0.82 g/cm$^3$, 0.83 g/cm$^3$, 0.84 g/cm$^3$, 0.85 g/cm$^3$, 0.86 g/cm$^3$, 0.87 g/cm$^3$, 0.88 g/cm$^3$, 0.89 g/cm$^3$, 0.9 g/cm$^3$, 0.91 g/cm$^3$, 0.92 g/cm$^3$, 0.93 g/cm$^3$, 0.94 g/cm$^3$, 0.95 g/cm$^3$, 0.96 g/cm$^3$, 0.97 g/cm$^3$, 0.98 g/cm$^3$, 0.99 g/cm$^3$, 1g/cm$^3$, 1.11 g/cm$^3$, 1.12 g/cm$^3$, 1.13 g/cm$^3$, 1.14 g/cm$^3$, 1.15 g/cm$^3$, 1.16 g/cm$^3$, 1.17 g/cm$^3$, 1.18 g/cm$^3$, 1.19 g/cm$^3$, 1.2 g/cm$^3$, 1.21 g/cm$^3$, 1.22 g/cm$^3$, 1.23 g/cm$^3$, 1.24 g/cm$^3$, 1.25 g/cm$^3$, 1.26 g/cm$^3$, 1.27 g/cm$^3$, 1.28 g/cm$^3$, 1.29 g/cm$^3$, 1.3g/cm$^3$, or in a range consisting of any two of these values. Preferably, the tap density of the iron phosphate precursor ranges from 0.9 g/cm$^3$ to 1.2 g/cm$^3$.

According to the present disclosure, the iron phosphate precursor has a specific surface area ranges from 6 m$^2$/g to 10 m$^2$/g.

In the present disclosure, when the specific surface area of the iron phosphate precursor is within the above-mentioned range, the precursor has a relatively high reaction activity. When the precursor is used to prepare a lithium iron phosphate cathode material, it is beneficial to diffusion of lithium ions and improving the charge and discharge capacity.

In the present disclosure, the specific surface area of the iron phosphate precursor ranges from 6 m$^2$/g to 10 m$^2$/g, for example, it can be 6 m$^2$/g, 6.1 m$^2$/g, 6.2 m$^2$/g, 6.3 m$^2$/g, 6.4 m$^2$/g, 6.5 m$^2$/g, 6.6 m$^2$/g, 6.7 m$^2$/g, 6.8 m$^2$/g, 6.9 m$^2$/g, 7 m$^2$/g, 7.1 m$^2$/g, 7.2 m$^2$/g, 7.3 m$^2$/g, 7.4 m$^2$/g, 7.5 m$^2$/g, 7.6 m$^2$/g, 7.7 m$^2$/g, 7.8 m$^2$/g, 7.9 m$^2$/g, 8 m$^2$/g, 8.1 m$^2$/g, 8.2 m$^2$/g, 8.3 m$^2$/g, 8.4 m$^2$/g, 8.5 m$^2$/g, 8.6 m$^2$/g, 8.7 m$^2$/g, 8.8 m$^2$/g, 8.9 m$^2$/g, 9 m$^2$/g, 9.1 m$^2$/g, 9.2 m$^2$/g, 9.3 m$^2$/g, 9.4 m$^2$/g, 9.5 m$^2$/g, 9.6 m$^2$/g, 9.7 m$^2$/g, 9.8 m$^2$/g, 9.9 m$^2$/g, 10 m$^2$/g, or in a range consisting of any two of these values. Preferably, the specific surface area of the iron phosphate precursor ranges from 6.5 m$^2$/g to 9.5 m$^2$/g.

According to the present disclosure, a content of sulfur in the iron phosphate precursor is lower than or equal to 400 ppm.

In the present disclosure, when the content of sulfur in the iron phosphate precursor is within the above-mentioned range, the lattice distortion caused by impurity ions can be effectively avoided, and the low temperature performance and cycle performance of the cathode material prepared thereby can be improved.

In the present disclosure, the content of sulfur in the iron phosphate precursor is ≤400 ppm, for example, it can be 400 ppm, 350 ppm, 300 ppm, 250 ppm, 200 ppm, 150 ppm, 100 ppm, 50 ppm, 40 ppm, 30 ppm, 25 ppm, 20 ppm, 15 ppm, 10 ppm, 5 ppm, 0 ppm, or in a range consisting of any two of these values. Preferably, the content of sulfur in the iron phosphate precursor is lower than or equal to 200 ppm.

In the present disclosure, the source of the iron phosphate precursor is not specifically limited, as long as the iron phosphate precursor has the structural features defined in the present disclosure.

In order to further ensure and improve the electrochemical performances of the lithium iron phosphate cathode material, preferably, the iron phosphate precursor of the present disclosure is prepared by the following steps: S1: dissolving an iron source and an M source in water, to obtain a mixed salt solution A1; S2: dissolving a phosphorus source in water, and adding a pH adjuster, to obtain a phosphorus source solution A2; S3: mixing the mixed salt solution A1, the phosphorus source solution A2, and an oxidant A3 for performing a synthesis reaction, and optionally adding an auxiliary agent; S4: filtering and washing the product of step S3, to obtain a filter cake B1, and beating the filter cake to obtain slurry, optionally adding an auxiliary agent, adjusting the pH value, performing aging-crystal transition reaction, and filtering and washing, to obtain a filter cake B3; and S5, calcining the filter cake, to obtain the iron phosphate precursor.

The pH value of the phosphorus source solution A2 ranges from 0.5 to 2.5. The conditions for the aging-crystal transition reaction include: a reaction temperature ranging from 70°C to 90°C, a heating rate ranging from 1°C/min to 3°C/min, and a reaction duration ranging from 1 hour to 3 hours. The conditions for the calcining include: a calcination temperature ranging from 500°C to 800°C, a heating rate ranging from 3°C/min to 8°C/min, and a calcination duration ranging from 2 hours to 4 hours.

In the present disclosure, by controlling the pH value of the phosphorus source solution, the conditions for the aging-crystal transition reaction, and the conditions for the calcining, the prepared iron phosphate precursor can include both an iron phosphate phase and an iron pyrophosphate phase, and characteristic peak diffraction intensities of the iron pyrophosphate phase and the iron phosphate phase and the lattice parameters of the iron phosphate precursor can satisfy the specific range. Specifically, the iron phosphate precursor according to the first aspect of the present disclosure is prepared, and when the prepared iron phosphate precursor is used to prepare a lithium iron phosphate cathode material, the pallet density of the lithium iron phosphate cathode material can be increased while lowering the sintering temperature.

Specifically, the pH value of the phosphorus source solution is controlled to regulate an oxidation precipitation reaction and generate amorphous iron phosphate; then the aging temperature, heating rate, and aging duration during the aging and crystal transition stage are regulated to complete the crystal transition from amorphous iron phosphate to dihydrate iron phosphate, thereby regulating the crystallinity and the lattice parameters of dihydrate iron phosphate; and finally, the calcination temperature, heating rate, and calcination duration in the calcination stage are regulated to complete the dehydration and the crystal transition from dihydrate iron phosphate to anhydrous iron phosphate, and the doping of iron pyrophosphate in iron phosphate is controlled to regulate the crystallinity and the lattice parameters of anhydrous iron phosphate.

In the present disclosure, the mixing method of the mixed salt solution A1, the phosphorus source solution A2, and the oxidant A3, as well as the timing of adding the auxiliary agent are not specifically limited, as long as the mixed salt solution A1, the phosphorus source solution A2, and the oxidant A3 can be fully and evenly mixed, or as long as the aging-crystal transition reaction can be performed optionally in the presence of an auxiliary agent.

In a specific embodiment of the present disclosure, the mixed salt solution A1, the phosphorus source solution A2, and the oxidant A3 are added to a reactor in parallel for a synthesis reaction.

In a specific embodiment of the present disclosure, the mixed salt solution A1 and the oxidant A3 fully react, and thereafter, the mixture and the phosphorus source solution A2 are added in parallel for a synthesis reaction.

In a specific embodiment of the present disclosure, the mixed salt solution A1 is used as a base solution, and the phosphorus source solution A2 and the oxidant A3 are added into a reactor in parallel for a synthesis reaction.

In the present disclosure, the pH value of the phosphorus source solution A2 ranges from 0.5 to 2.5, for example, it can be 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, or in a range consisting of any two of these values. In a preferred embodiment of the present disclosure, the pH value of the phosphorus source solution A2 ranges from 1 to 2.

In the present disclosure, the conditions for the aging-crystal transition reaction include: a reaction temperature ranging from 70°C to 90°C, for example, 70°C, 75°C, 80°C, 85°C, 90°C, or in a range consisting of any two of these values; a heating rate ranging from 1°C/min to 3°C/min, for example, 1°C/min, 1.5°C/min, 2°C/min, 2.5°C/min, 3°C/min, or in a range consisting of any two of these values; and a reaction duration ranging from 1 hour to 3 hours, for example, 1 hour, 1.5 hours, 2 hours, 2.5 hours, 3 hours, or in a range consisting of any two of these values. In a preferred embodiment of the present disclosure, the conditions for the aging-crystal transition reaction include: a reaction temperature ranging from 80°C to 85°C, a heating rate ranging from 2°C/min to 3°C/min, and a reaction duration ranging from 1 hour to 2 hours.

In the present disclosure, the conditions for the calcining include: a calcination temperature ranging from 500°C to 800°C, for example, 500°C, 550°C, 600°C, 650°C, 700°C, 750°C, 800°C, or in a range consisting of any two of these values; a heating rate ranging from 3°C/min to 8°C/min, for example, 3°C/min, 3.5°C/min, 4°C/min, 4.5°C/min, 5°C/min, 5.5°C/min, 6°C/min, 6.5°C/min, 7°C/min, 7.5°C/min, 8°C/min, or in a range consisting of any two of these values; and a calcination duration ranging from 2 hours to 4 hours, for example, 2 hours, 2.5 hours, 3 hours, 3.5 hours, 4 hours, or in a range consisting of any two of these values. In a preferred embodiment of the present disclosure, the conditions for the calcining include: a calcination temperature ranging from 600°C to 750°C, a heating rate ranging from 3°C/min to 5°C/min, and a calcination duration ranging from 2 hours to 3 hours.

According to the present disclosure, in step (4), the pH value is adjusted to range from 1 to 2.5, for example, it can be 1, 1.5, 2, 2.5, or in a range consisting of any two of these values, and preferably, from 1 to 2.

In the present disclosure, for step (4), the method for adjusting the pH value is not specifically limited. In order to avoid the introduction of impurities, preferably, phosphoric acid is added to adjust the pH value.

According to the present disclosure, in step (1), the concentration of the mixed salt solution A1 ranges from 0.1 mol/L to 4 mol/L, for example, it can be 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1 mol/L, 1.5 mol/L, 2 mol/L, 2.5 mol/L, 3 mol/L, 3.5 mol/L, 4 mol/L, or in a range consisting of any two of these values, and preferably, from 0.2 mol/L to 2 mol/L.

In the present disclosure, the type of iron source is not specifically limited. The iron source includes, but is not limited to, ferrous iron salts. Preferably, the ferrous iron salt is selected from at least one of ferrous sulfate, ferrous chloride, ferrous nitrate, and ferrous acetate.

In the present disclosure, the type of M source is not specifically limited. The M source is a compound capable of providing element M selected from at least one of Mn, Al, Mg, Co, Ni, Cu, Zn, Zr, and Ti, including, but not limited to, oxides containing M, salts containing M, and the like.

In the present disclosure, in step S1, the iron source and the M source satisfy $0 \leq n(M)/[n(Fe)+n(M)] \leq 0.1$, and preferably, $0 < n(M)/[n(Fe)+n(M)] \leq 0.05$.

In the present disclosure, the concentration of the phosphorus source solution A2 ranges from 0.2 mol/L to 20 mol/L, for example, it can be 0.2 mol/L, 0.4 mol/L, 0.6 mol/L, 0.8 mol/L, 1 mol/L, 1.2 mol/L, 1.4 mol/L, 1.6 mol/L, 1.8 mol/L, 2 mol/L, 3 mol/L, 4 mol/L, 5 mol/L, 6 mol/L, 7 mol/L, 8 mol/L, 9 mol/L, 10 mol/L, 11 mol/L, 12 mol/L, 13 mol/L, 14 mol/L, 15 mol/L, 16 mol/L, 17 mol/L, 18 mol/L, 19 mol/L, 20 mol/L, or in a range consisting of any two of these values, and preferably, from 1 mol/L to 15 mol/L.

In the present disclosure, the type of phosphorus source is not specifically limited. The phosphorus source includes, but is not limited to, at least one of phosphoric acid, sodium dihydrogen phosphate, disodium hydrogen phosphate, ammonium dihydrogen phosphate, and ammonium monohydrogen phosphate. Preferably, the phosphorus source is selected from at least one of phosphoric acid, sodium dihydrogen phosphate, and ammonium dihydrogen phosphate.

In the present disclosure, the type of pH adjuster is not specifically limited. The function of the pH adjuster is to adjust the pH of the solution. The pH adjuster is an acid solution or an alkaline solution. Preferably, the pH adjuster is selected from at least one of sodium hydroxide, ammonia water, sulfuric acid, hydrochloric acid, and nitric acid.

In the present disclosure, in step S3, the amount of the mixed salt solution A1 and the amount of the phosphorus source solution A2 enable $n(P)$: $n(Fe)$ to satisfy (1 to 3): 1, and preferably, (1 to 1.5): 1.

In the present disclosure, in step S3, the amount of the mixed salt solution A1 and the amount of the oxidant A3 enable $n(oxidant)$: $n(Fe)$ to satisfy (1 to 5): 1, and preferably, (1 to 3): 1.

In the present disclosure, the type of oxidant is not specifically limited. The oxidant includes, but is not limited to, hydrogen peroxide, ozone, sodium persulfate, ammonium persulfate, sodium hypochlorite, and sodium ferrate. Preferably, the oxidant is selected from at least one of hydrogen peroxide, sodium persulfate, and ammonium persulfate.

In the present disclosure, the conditions for the synthesis reaction include: a reaction temperature ranging from 25°C to 60°C, for example, 25°C, 30°C, 35°C, 40°C, 45°C, 50°C, 55°C, 60°C, or in a range consisting of any two of these values; and a reaction duration ranging from 1 hour to 6 hours, for example, 1 hour, 1.5 hours, 2 hours, 2.5 hours, 3 hours, 3.5 hours, 4 hours, 4.5 hours, 5 hours, 5.5 hours, 6 hours, or in a range consisting of any two of these values.

Further, the conditions for the synthesis reaction include: a reaction temperature ranging from 40°C to 60°C and a reaction duration ranging from 1 hour to 3 hours.

In the present disclosure, during the preparation of the iron phosphate precursor, an auxiliary agent is added during the aging and crystal transition stage or the synthesis reaction stage, to induce the deposition and arrangement of crystal nuclei, allowing the secondary particles of the precursor to be denser, while the auxiliary agent is conducive to removing sulfur impurities in the lattice, thereby affecting the lattice parameters.

In the present disclosure, the auxiliary agent is selected from at least one of sodium hexadecyl benzene sulfonate, sodium dodecylbenzene sulfonate, triethanolamine, ethylene glycol, polyvinyl pyrrolidone, polyethylene glycol, lignocellulose, and carboxymethyl cellulose. Preferably, the auxiliary agent is selected from at least one of sodium hexadecyl benzene sulfonate, polyethylene glycol, lignocellulose, and carboxymethyl cellulose.

In the present disclosure, based on the total amount of the iron source and the M source, the amount of the auxiliary agent ranges from 0.1 wt% to 1 wt%, for example, it can be 0.1 wt%, 0.2 wt%, 0.3 wt%, 0.4 wt%, 0.5 wt%, 0.6 wt%, 0.7 wt%, 0.8 wt%, 0.9 wt%, 1 wt%, or in a range consisting of any two of these values, and preferably, from 0.1 wt% to 0.5 wt%.

In the present disclosure, when the amount of the auxiliary agent is controlled to satisfy the above-mentioned range, the deposition and arrangement of crystal nuclei can be induced, allowing the secondary particles to be denser, while the auxiliary agent is conducive to removing sulfur impurities in the lattice, thereby further modulating the lattice parameters in the precursor.

In the present disclosure, the washing method in step S4 is not specifically required, and it can be performed according to a conventional washing method known in the art. Preferably, a washing liquid is used, and preferably, purified water at a temperature ranging from 20°C to 90°C is used, and more preferably, purified water at a temperature ranging from 30°C to 60°C is used for washing.

According to the present disclosure, amounts of the iron phosphate precursor, the lithium source, the metal source M, and the Mn source satisfy $n(Li)$: $n(Fe)$: $n(M)$: $n(Mn)=1+a$: $b$: $c$: $d$, where: $-0.1 \leq a \leq 0.1$, $0 \leq b \leq 1$, $0 \leq c \leq 0.5$, and $0 \leq d \leq 1$.

In the present disclosure, the specific amount of the metal source M is not specifically limited, as long as the amount of the metal source M and the amount of the iron phosphate precursor allow the content $c$ of element M in the cathode material to satisfy $0 \leq c \leq 0.5$.

Further, the amounts of the iron phosphate precursor, the lithium source, the metal source M, and the Mn source satisfy n(Li): n(Fe): n(M): n(Mn)=1+$a$: $b$: $c$: $d$, where: - $0.05 \leq a \leq 0.05$, $0.5 \leq b \leq 1$, $0.001 \leq c \leq 0.1$, and $0 \leq d \leq 0.5$.

According to the present disclosure, based on the total mass of the iron phosphate precursor, the amount of the carbon source ranges from 8 wt% to 18 wt%, for example, it can be 8 wt%, 9 wt%, 10 wt%, 11 wt%, 12 wt%, 13 wt%, 14 wt%, 15 wt%, 16 wt%, 17 wt%, 18 wt%, or in a range consisting of any two of these values, and preferably, from 10 wt% to 15 wt%.

In the present disclosure, the type of the liquid medium is not specifically limited, as long as a uniform slurry can be formed. For example, the liquid medium is selected from at least one of water, methanol, ethanol, propanol, ethylene glycol, isopropanol, benzyl alcohol, acetone, benzene, toluene, methyl ether, ethyl ether, acetic acid, xylene, tetrahydrofuran, dimethyl carbonate, N-methyl pyrrolidone, propylene carbonate, triethylamine, triethanolamine, N,N-dimethylformamide, N,N-diethyl formamide, acetonitrile, and ethylene glycol dimethyl ether. The amount of the liquid medium is not specifically limited, as long as the uniform slurry can be formed.

In the present disclosure, the type of the lithium source is not specifically limited. For example, the lithium source is selected from at least one of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, and lithium dihydrogen phosphate. Preferably, the lithium source is selected from at least one of lithium hydroxide, lithium carbonate, and lithium dihydrogen phosphate.

In the present disclosure, the type of the carbon source is not specifically limited. For example, the carbon source is selected from at least one of glucose, sucrose, fructose, cellulose, starch, citric acid, polyacrylic acid, phenolic resin, polyethylene glycol, dopamine, graphene, and carbon nanotubes. Preferably, the carbon source is selected from at least one of glucose, sucrose, starch, graphene, and polyethylene glycol.

In the present disclosure, the type of the metal source M is not specifically limited, as long as it can provide a compound containing element M. For example, the metal source M is selected from at least one of oxalates, nitrates, acetates, oxides, hydroxides, carbonates, phosphates, metal clusters, metal complexes, and carboxylates that can provide the element M.

In the present disclosure, the type of the Mn source is not specifically limited. For example, the Mn source is at least one selected from manganese sulfate, manganese nitrate, manganese acetate, manganese chloride, and manganese oxide.

In the present disclosure, the method and conditions for the grinding are not specifically limited, as long as the mixture of the iron phosphate precursor, the lithium source, the carbon source, the Mn source, the metal source M, and the liquid medium can be fully ground to enable the median particle size $D_{50}$ of the slurry obtained by grinding to range from 50 nm to 2,000 nm, and preferably, from 100 nm to 1,000 nm.

In a specific embodiment of the present disclosure, the conditions for the grinding include: using a planetary ball mill, with a rotation speed ranging from 100 rpm to 600 rpm, and a duration ranging from 1 hour to 24 hours; and/or using a stirred mill and/or a sand mill, with a rotation speed ranging from 300 rpm to 3,000 rpm, and a duration ranging from 0.5 hour to 10 hours

According to the present disclosure, the slurry has a solid content ranging from 10 wt% to 70 wt%, and preferably, from 20 wt% to 60 wt%.

According to the present disclosure, the drying is spray drying.

According to the present disclosure, conditions for the spray drying include: an air inlet temperature ranging from 190°C to 280°C and an air outlet temperature ranging from 60°C to 120°C.

Further, the conditions for the spray drying include: an air inlet temperature ranging from 200°C to 270°C and an air outlet temperature ranging from 70°C to 110°C.

In the present disclosure, in step (1), for the spray-dried material, the median particle size $D_{50}$ ranges from 5 $\mu$m to 50 $\mu$m, and preferably, from 8 $\mu$m to 40 $\mu$m; the specific surface area ranges from 5 $m^2$/g to 15 $m^2$/g, and preferably, from 8 $m^2$/g to 13 $m^2$/g; the bulk density ranges from 0.3 $g/cm^3$ to 1 $g/cm^3$, and preferably, from 0.5 $g/cm^3$ to 0.8 $g/cm^3$; and the moisture content is $\leq 5\%$, and preferably, $\leq 3\%$.

According to the present disclosure, in step (2), the conditions for the calcination treatment include: a calcination temperature ranging from 500°C to 900°C, for example, 500°C, 550°C, 600°C, 650°C, 700°C, 750°C, 800°C, 850°C, 900°C, or in a range consisting of any two of these values; and a calcination duration ranging from 4 hours to 20 hours, for example, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, or in a range consisting of any two of these values.

In the present disclosure, the calcination treatment is performed under the above-mentioned conditions, such that the prepared cathode material can have uniform and rounded particles and the carbon coating layer can have a moderate thickness, thereby further improving the electronic conductivity and processing performance of the cathode material.

Further, in step (2), the conditions for the calcination treatment include: a calcination temperature ranging from 600°C to 800°C and a calcination duration ranging from 6 hours to 15 hours.

In the present disclosure, the protective atmosphere is selected from nitrogen and/or argon.

In the present disclosure, in step (3), the crushing device is selected from an airflow crushing machine and/or a mechanical crushing machine.

A third aspect of the present disclosure provides a lithium iron phosphate cathode material, prepared by the above-mentioned preparation method.

A fourth aspect of the present disclosure provides a lithium-ion battery. The lithium-ion battery includes the above-mentioned lithium iron phosphate cathode material.

In the present disclosure, when the above-mentioned lithium iron phosphate cathode material is applied to a lithium-ion battery, the electrochemical performances of the lithium-ion battery can be effectively improved, and the lithium-ion battery can exhibit higher capacity and energy efficiency, lower internal resistance, and better cycle performances.

In the present disclosure, 0.1C capacity of the lithium-ion battery prepared from the lithium iron phosphate cathode material is greater than or equal to 158 mAh/g, and preferably, greater than or equal to 160 mAh/g.

In the present disclosure, 0.5C capacity of the lithium-ion battery prepared from the lithium iron phosphate cathode material is greater than or equal to 151 mAh/g, and preferably, greater than or equal to 152 mAh/g.

In the present disclosure, 1C capacity of the lithium-ion battery prepared from the lithium iron phosphate cathode material is greater than or equal to 143.5 mAh/g, and preferably, greater than or equal to 145.5 mAh/g.

In the present disclosure, 1C capacity retention rate after 200 cycles of the lithium-ion battery prepared from the lithium iron phosphate cathode material is greater than or equal to 97%.

In the present disclosure, a first-cycle energy efficiency of the lithium-ion battery prepared from the lithium iron phosphate cathode material is greater than or equal to 90%, and preferably, greater than or equal to 91%.

The present disclosure will be described in detail below by means of examples.

In the following examples, the crystallization performances such as the lattice parameters of the iron phosphate precursor were measured using an XRD-6000 X-ray powder diffractometer from Shimadzu, Japan. The voltage was 40 kV, the current was 40 mA, and the step size was 0.005°; and the height limit slit was 10 mm, the divergence slit was 1/2°, the antiscatter slit was 8 mm, and the receiving slit was open. The test scan 2θ angle ranged from 10° to 80°, and the scanning was continuous in 1D mode at a scanning speed of 1.2°/min.

The content of each element in the iron phosphate precursor and lithium iron phosphate cathode material was measured using a 5800 ICP-OES spectrometer from Agilent, USA. The argon partial pressure gauge was controlled to be within the range from 80 psi to 100 psi, the liquid argon booster valve compression control pressure was above 200 psi, nitrogen was controlled to range from 60 psi to 100 psi, and compressed air was controlled to be within the range from 80 psi to 100psi. When plotting a standard curve, a three-point calibration was required based on the concentration of the sample, and the coefficient of the standard curve was above 0.9999.

The median particle size of the iron phosphate precursor and the median particle size of the lithium iron phosphate cathode material were measured using a Malvern laser particle size analyzer, i.e., Mastersizer 3000. A certain amount of sodium pyrophosphate dispersant was added, and the sample was added, until a light shielding ranged from 10% to 20%. Ultrasonication was performed for 3 minutes before starting the measurement, and the average of three measured values was taken as the measurement value of the median particle size.

The size of primary particles of the iron phosphate precursor was measured using an S-4800 scanning electron microscope from Hitachi, Japan, with a test voltage ranging from 1 kV to 5 kV and a test magnification ranging from 1 k to 30 k.

The tap density of the iron phosphate precursor material was measured using a BT-30 tap density tester from Baxter, with vibration times of 3,000 times and a vibration frequency of 250 times/min.

The specific surface area of the iron phosphate precursor and the specific surface area of the lithium iron phosphate cathode material were measured using a Tristar II3020 specific surface area tester from Micromertics, USA, with a degassing temperature of 300°C and a degassing duration of 120 minutes.

The pallet density of the lithium iron phosphate cathode material was measured using the MCP-PD51 pallet density meter from Mitsubishi Chemical Corporation, Japan. 1±0.01 g of sample was weighed and the pressure of 3T was selected for the measurement.

The volume resistivity of the lithium iron phosphate cathode material was measured using the MCP-PD51 powder compaction resistivity tester from Mitsubishi Chemical Corporation, Japan. The volume resistivity was measured using the four-probe method under a pressure of 20 kN.

The raw materials used in the examples and comparative examples are all commercially available products.

**Preparation Examples: Preparation of Iron Phosphate Precursor**

**Preparation Example 1**

S1: Ferrous sulfate and titanyl sulfate were weighed according to a molar ratio of n(Fe): n(Ti)=0.99: 0.01 and dissolved in deionized water, to prepare a mixed salt solution A1 (2 mol/L).

S2: Concentrated phosphoric acid was weighed and added with sodium hydroxide with a concentration of 30% to adjust pH of the solution to be 2, to prepare a phosphorus source solution A2 (2 mol/L).

S3: The mixed salt solution A1, the phosphorus source solution A2, and a hydrogen peroxide solution A3 with a concentration of 30% were added into a reactor in parallel for a synthesis reaction. A reaction temperature was 40°C, and a reaction duration was 1 hour.

S4: After the reaction was completed, the reaction slurry was filtered and washed to obtain a filter cake. The filter cake was beaten to obtain slurry, which was added to the reactor. Based on a total mass of ferrous sulfate and titanyl sulfate, 0.1 wt% of lignocellulose was added, and pH of the solution was adjusted to 1.5 by adding phosphoric acid. A heating rate was controlled at 2°C/min, an aging temperature was 82°C, and an aging duration was 2 hours. After the reaction was completed, the reaction slurry was filtered and washed to obtain a filter cake.

S5: The filter cake was subjected to high-temperature calcination and dehydration. A heating rate was controlled at 3°C/min, a calcination temperature was 700°C, and a calcination duration was 3 hours. In this way, an anhydrous iron phosphate precursor P1 having a composition of $(Fe_{0.99}Ti_{0.01}PO_4)_{0.91}[Fe_4(P_2O_7)_3]_{0.015}$ was obtained, where x=0.015, and y=0.01.

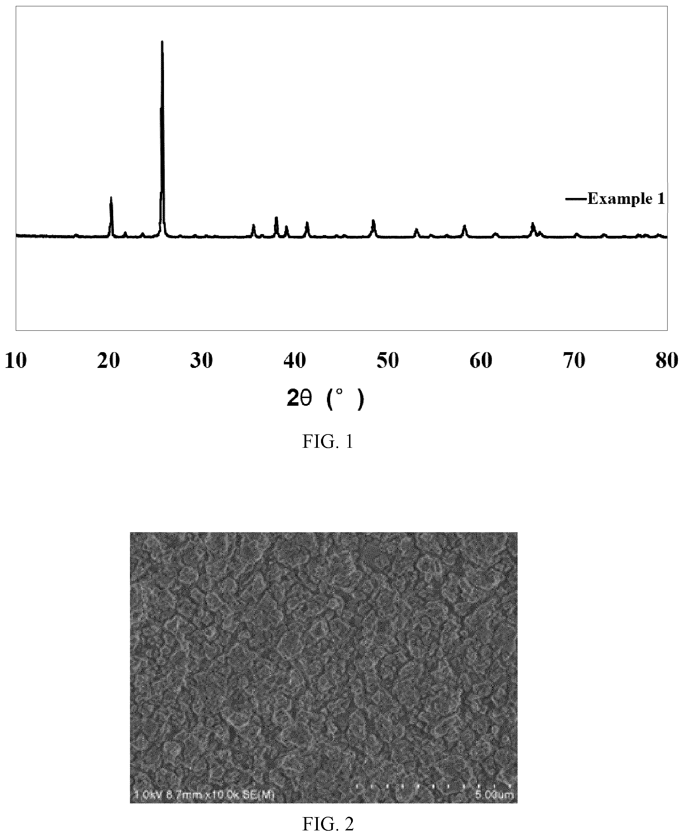

FIG. 1 is an XRD pattern of the iron phosphate precursor P1. It can be seen from FIG. 1 that the precursor material had diffraction characteristic peaks at $2\theta_{a1}$=16.2° to 16.9°, $2\theta_{a2}$=27.3° to 28.1°, $2\theta_{a3}$=29.0° to 29.7°, and $2\theta_{a4}$=30.2° to 30.9°; and that the precursor material also had characteristic peaks at $2\theta_{b1}$=20° to 20.7°, $2\theta_{b2}$=21.5° to 22.2°, $2\theta_{b3}$=23.4° to 24°, and $2\theta_{b4}$=25.5° to 26.2°. Thus, the iron phosphate precursor was considered to include an iron pyrophosphate phase. Through calculation, it was found that $\dfrac{A(2\theta ai)}{A(2\theta ai)+A(2\theta bj)}=1.5\%$ .

FIG. 2 is an SEM image of the iron phosphate precursor P1. FIG. 2 reveals that the primary particles were uniform and dense, and differences between the particles were reduced during the calcination stage, thereby effectively increasing the pallet density of the cathode material.

**Preparation Example 2**

S1: Same as Preparation Example 1.
S2: Same as Preparation Example 1.
S3: Same as Preparation Example 1.
S4: Same as Preparation Example 1.
S5: The filter cake was subjected to high-temperature calcination and dehydration. A heating rate was controlled at 5°C/min, a calcination temperature was 650°C, and a calcination duration was 2 hours. In this way, an anhydrous iron phosphate precursor P2 having a composition of $(Fe_{0.99}Ti_{0.01}PO_4)_{0.886}[Fe_4(P_2O_7)_3]_{0.019}$ was obtained, where x=0.019, and y=0.01.

**Preparation Example 3**

S1: Same as Preparation Example 1.
S2: Same as Preparation Example 1.
S3: Same as Preparation Example 1.
S4: After the reaction was completed, the reaction slurry was filtered and washed to obtain a filter cake. The filter cake was beaten to obtain slurry, which was added to the reactor. Based on a total mass of ferrous sulfate and titanyl sulfate, 0.1 wt% of lignocellulose was added, and pH of the solution was adjusted to 1.5 by adding phosphoric acid. A heating rate was controlled at 3°C/min, an aging temperature was 80°C, and an aging duration was 1 hour. After the reaction was completed, the reaction slurry was filtered and washed to obtain a filter cake.

S5: Same as Preparation Example 1. An anhydrous iron phosphate precursor P3 having composition of $(Fe_{0.09}Ti_{0.01}PO_4)_{0.904}[Fe_4(P_2O_7)_3]_{0.016}$ was obtained, where x=0.016, and y=0.01.

**Preparation Example 4**

S1: Same as Preparation Example 1.
S2: Concentrated phosphoric acid was weighed, and added with sodium hydroxide with a concentration of 30% to adjust pH of the solution to be 1.5, to prepare a phosphorus source solution (2 mol/L).
S3: Same as Preparation Example 1.

S4: Same as Preparation Example 1.

S5: Same as Preparation Example 1. An anhydrous iron phosphate precursor P4 having a composition of $(Fe_{0.99}Ti_{0.01}PO_4)_{0.898}[Fe_4(P_2O_7)_3]_{0.017}$ was obtained, where x=0.017, and y=0.01.

**Preparation Example 5**

S1: Same as Preparation Example 1.

S2: Ammonium dihydrogen phosphate was weighed and dissolved in deionized water, and added with dilute sulfuric acid with a concentration of 30% to adjust pH of the solution to be 2, to prepare a phosphorus source solution (2 mol/L).

S3: Same as Preparation Example 1.

S4: Same as Preparation Example 1.

S5: Same as Preparation Example 1. An anhydrous iron phosphate precursor P5 having a composition of $(Fe_{0.99}Ti_{0.01}PO_4)_{0.91}[Fe_4(P_2O_7)_3]_{0.015}$ was obtained, where x=0.015, and y=0.01.

**Preparation Example 6**

S1: Same as Preparation Example 1.

S2: Ammonium dihydrogen phosphate was weighed and dissolved in deionized water, and added with dilute sulfuric acid with a concentration of 30% to adjust pH of the solution to be 2, to prepare a phosphorus source solution (2 mol/L).

S3: Same as Preparation Example 1.

S4: After the reaction was completed, based on a total mass of ferrous sulfate and titanyl sulfate, 0.1 wt% of lignocellulose was added, and pH of the solution was adjusted to 1.5 by adding phosphoric acid. A heating rate was controlled at 2°C/min, an aging temperature was 82°C, and an aging duration was 2 hours. After the reaction was completed, the reaction slurry was filtered and washed to obtain a filter cake.

S5: Same as Preparation Example 1. An anhydrous iron phosphate precursor P6 having a composition of $(Fe_{0.99}Ti_{0.01}PO_4)_{0.91}[Fe_4(P_2O_7)_3]_{0.015}$ was obtained, where x=0.015, and y=0.01.

**Preparation Example 7**

S1: Ferrous sulfate was weighed and dissolved in deionized water, to prepare a salt solution (2 mol/L).

S2: Same as Preparation Example 1.

S3: Same as Preparation Example 1.

S4: Same as Preparation Example 1.

S5: Same as Preparation Example 1. An anhydrous iron phosphate precursor P7 having a composition of $(FePO_4)_{0.88}[Fe_4(P_2O_7)_3]_{0.02}$ was obtained, where x=0.02, and y=0.01.

**Comparative Preparation Example 1**

S1: Same as Preparation Example 1.

S2: Same as Preparation Example 1.

S3: Same as Preparation Example 1.

S4: Same as Preparation Example 1.

S5: The filter cake was subjected to high-temperature calcination and dehydration. A heating rate was controlled at 2°C/min, a calcination temperature was 850°C, and a calcination duration was 5 hours. In this way, an anhydrous iron phosphate precursor DP1 having a composition of $(Fe_{0.99}Ti_{0.01}PO_4)_{0.958}[Fe_4(P_2O_7)_3]_{0.007}$ was obtained, where x=0.007, and y=0.01.

**Comparative Preparation Example 2**

S1: Same as Preparation Example 1.

S2: Same as Preparation Example 1.

S3: Same as Preparation Example 1.

S4: After the reaction was completed, the reaction slurry was filtered and washed to obtain a filter cake. The filter cake was beaten to obtain slurry, which was added to the reactor. Lignocellulose was added, and pH of the solution was adjusted to 1.5 by adding phosphoric acid. A heating rate was controlled at 0.5°C/min, an aging temperature was 95°C, and an aging duration was 4 hours. After the reaction was completed, the reaction slurry was filtered and washed to obtain a filter cake.

S5: Same as Preparation Example 1. An anhydrous iron phosphate precursor DP2 having a composition of $(Fe_{0.99}Ti_{0.01}PO_4)_{0.946}[Fe_4(P_2O_7)_3]_{0.009}$ was obtained, where x=0.009, and y=0.01.

**Comparative Preparation Example 3**

S1: Same as Preparation Example 1.

S2: Substantially same as Preparation Example 1, except that concentrated phosphoric acid was weighed and added with sodium hydroxide with a concentration of 30% to adjust pH of the solution to be 3, to prepare a phosphorus source solution (2 mol/L).

S3: Same as Preparation Example 1.

S4: Same as Preparation Example 1.

S5: The filter cake was subjected to high-temperature calcination and dehydration. A heating rate was controlled at 3°C/min, a calcination temperature was 700°C, and a calcination duration was 3 hours. In this way, an anhydrous iron phosphate precursor DP3 having a composition of $(Fe_{0.99}Ti_{0.01}PO_4)_{0.952}[Fe_4(P_2O_7)_3]_{0.008}$ was obtained, where x=0.008, and y=0.01.

The physicochemical indicators of the lithium iron phosphate precursor prepared in the preparation examples are listed in Table 1.

[Table 1]

| | Ratio* | Lattice parameter *c/a* | $D_{50}$ | TD | BET | Me/P |
|---|---|---|---|---|---|---|
| Unit | / | / | $\mu m$ | $g/cm^3$ | $m^2/g$ | / |
| Preparation Example 1 | 1.5% | 2.2322 | 10.36 | 1.15 | 7.6 | 0.97 |
| Preparation Example 2 | 1.9% | 2.2313 | 10.08 | 1.18 | 6.9 | 0.962 |
| Preparation Example 3 | 1.6% | 2.2318 | 9.98 | 1.18 | 7.5 | 0.968 |
| Preparation Example 4 | 1.7% | 2.2315 | 10.56 | 1.14 | 7.8 | 0.966 |
| Preparation Example 5 | 1.5% | 2.2322 | 10.23 | 1.16 | 7.9 | 0.97 |
| Preparation Example 6 | 1.5% | 2.2322 | 10.16 | 1.15 | 7.7 | 0.97 |
| Preparation Example 7 | 1.5% | 2.2321 | 10.26 | 1.15 | 7.7 | 0.971 |
| Comparative Preparation Example 1 | 0.70% | 2.2338 | 10.87 | 1.37 | 5.3 | 0.986 |
| Comparative Preparation Example 2 | 0.90% | 2.2335 | 11.34 | 1.33 | 5.8 | 0.982 |
| Comparative Preparation Example 3 | 0.80% | 2.2336 | 10.86 | 1.35 | 5.5 | 0.984 |
| * refers to $\dfrac{A(2\theta ai)}{A(2\theta ai)+A(2\theta bj)}$. | | | | | | |

Examples: Preparation of Lithium Iron Phosphate Cathode Materials

**Example 1**

(1) The iron phosphate precursor P1, lithium carbonate, and titanium oxide were added according to n(Fe): n(Li): n(Ti) =0.961: 1.04: 0.019 and mixed with purified water. Based on a mass of carbon source and a mass of the iron phosphate precursor P1, 12 wt% of glucose was added. A solid content was controlled to be 40 wt%. The mixture was uniformly mixed by mechanical stirring, to obtain slurry. The slurry was ground by a sand mill (condition: a rotation speed of 800 rpm), and a median particle size $D_{50}$ of the slurry was controlled to be 380 nm. The ground slurry was spray-dried and granulated, and a spray-dried material was obtained by controlling an air inlet temperature to be 235°C and an air outlet temperature to be 85°C.

(2) The spray-dried material was subjected to a sintering treatment under $N_2$ atmosphere. A sintered material was obtained by controlling a heating rate to be 2°C/min, a calcination temperature to be 770°C, and a calcination duration to be 9 hours.

(3) The sintered material was crushed and sieved by air flow, to obtain a lithium iron phosphate cathode material A1.

The lithium iron phosphate cathode material A1 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

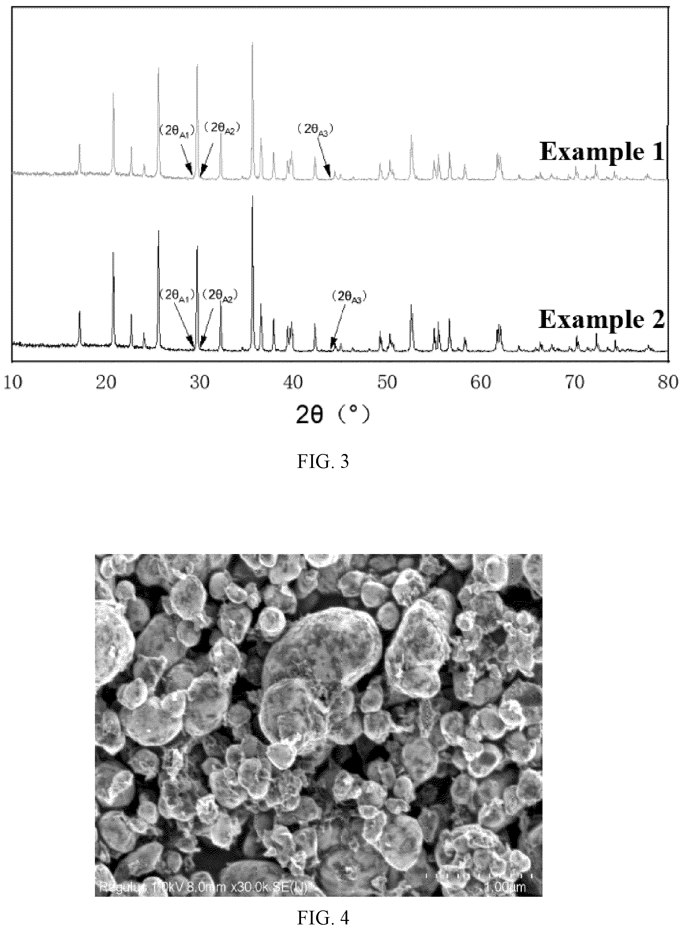

FIG. 3 is an XRD pattern of the lithium iron phosphate cathode material A1. It can be seen from FIG. 3 that the cathode material had diffraction characteristic peaks at $2\theta_{A1}=29.4°$ to $29.6°$, $2\theta_{A2}=29.8°$ to $30°$, and $2\theta_{A3}=43.8°$ to $43.9°$; and that the cathode material had diffraction characteristic peaks at $2\theta_{B1}=25.4°$ to $25.5°$, $2\theta_{B2}=35.9°$ to $36°$, and $2\theta_{B3}=60.7°$ to $60.8°$. Through analysis, it was speculated that lithium iron pyrophosphate phase existed in the cathode material A1, and for the cathode material, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.255. At the same time, a pallet density of the lithium iron phosphate cathode material A1 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 2**

(1) Substantially same as Example 1, except that: the iron phosphate precursor P2 was adopted to replace the iron phosphate precursor P1; and the iron phosphate precursor P2, lithium carbonate, and titanium oxide were added according to n(Fe): n(Li): n(Ti)=0.953: 1.04: 0.019 and mixed with purified water, to obtain a spray-dried material.
(2) Same as Example 1.
(3) Same as Example 1. A lithium iron phosphate cathode material A2 was obtained. The lithium iron phosphate cathode material A2 included a matrix and a carbon coating layer coated on a surface of the matrix. The matrix had a composition of $Li_{1.04}(Fe_{0.953}Ti_{0.019})(PO_4)_{0.886}(P_2O_7)_{0.057}$.

XRD analysis indicates that for the cathode material A2, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.267. At the same time, a pallet density of the lithium iron phosphate cathode material A2 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 3**

(1) Substantially same as Example 1, except that: the iron phosphate precursor P3 was adopted to replace the iron phosphate precursor P1; and the iron phosphate precursor P3, lithium carbonate, and titanium oxide were added according to n(Fe): n(Li): n(Ti)=0.959: 1.04: 0.019 and mixed with purified water, to obtain a spray-dried material.
(2) Same as Example 1.
(3) Same as Example 1. A lithium iron phosphate cathode material A3 was obtained. The lithium iron phosphate cathode material A3 included a matrix and a carbon coating layer coated on a surface of the matrix. The matrix had a composition of $Li_{1.04}(Fe_{0.959}Ti_{0.019})(PO_4)_{0.904}(P_2O_7)_{0.048}$.

XRD analysis indicates that for the cathode material A3, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.264. At the same time, a pallet density of the lithium iron phosphate cathode material A3 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 4**

(1) Substantially same as Example 1, except that: the iron phosphate precursor P4 was adopted to replace the iron phosphate precursor P1; and the iron phosphate precursor P4, lithium carbonate, and titanium oxide were added according to n(Fe): n(Li): n(Ti)=0.957: 1.04: 0.019 and mixed with purified water, to obtain a spray-dried material.
(2) Same as Example 1.
(3) Same as Example 1. A lithium iron phosphate cathode material A4 was obtained. The lithium iron phosphate cathode material A4 included a matrix and a carbon coating layer coated on a surface of the matrix. The matrix had a composition of $Li_{1.04}(Fe_{0.957}Ti_{0.019})(PO_4)_{0.898}(P_2O_7)_{0.051}$.

XRD analysis indicates that for the cathode material A4, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.266. At the same time, a pallet density of the lithium iron phosphate cathode material A4 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 5**

(1) Substantially same as Example 1, except that: the iron phosphate precursor P5 was adopted to replace the iron phosphate precursor P1; and the iron phosphate precursor P5, lithium carbonate, and titanium oxide were added according to n(Fe): n(Li): n(Ti)=0.961: 1.04: 0.019 and mixed with purified water, to obtain a spray-dried material.
(2) Same as Example 1.
(3) Same as Example 1. A lithium iron phosphate cathode material A5 was obtained. The lithium iron phosphate cathode material A5 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

XRD analysis indicates that for the cathode material A5, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.254. At the same time, a pallet density of the lithium iron phosphate cathode material A5 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 6**

(1) Substantially same as Example 1, except that: the iron phosphate precursor P6 was adopted to replace the iron phosphate precursor P1; and the iron phosphate precursor P6, lithium carbonate, and titanium oxide were added according to n(Fe): n(Li): n(Ti)=0.961: 1.04: 0.019 and mixed with purified water, to obtain a spray-dried material.
(2) Same as Example 1.
(3) Same as Example 1. A lithium iron phosphate cathode material A6 was obtained. The lithium iron phosphate cathode material A6 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

XRD analysis indicates that for the cathode material A6, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.253. At the same time, a pallet density of the lithium iron phosphate cathode material A6 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 7**

(1) Substantially same as Example 1, except that: the iron phosphate precursor P7 was adopted to replace the iron phosphate precursor P1; and the iron phosphate precursor P7, lithium carbonate, and titanium oxide were added according to n(Fe): n(Li): n(Ti)=0.960: 1.04: 0.019 and mixed with purified water, to obtain a spray-dried material.
(2) Same as Example 1.
(3) Same as Example 1. A lithium iron phosphate cathode material A7 was obtained. The lithium iron phosphate cathode material A7 included a matrix and a carbon coating layer coated on a surface of the matrix. The matrix had a composition of $Li_{1.04}(Fe_{0.960}Ti_{0.019})(PO_4)_{0.88}(P_2O_7)_{0.06}$.

XRD analysis indicates that for the cathode material A7, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.254. At the same time, a pallet density of the lithium iron phosphate cathode material A7 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 8**

(1) Substantially same as Example 1, except that the median particle size $D_{50}$ of the slurry was controlled to be 450 nm, to obtain a spray-dried material.
(2) Same as Example 1.
(3) Same as Example 1. A lithium iron phosphate cathode material A8 was obtained. The lithium iron phosphate cathode material A8 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

XRD analysis indicates that for the cathode material A8, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.25. At the same time, a pallet density of the lithium iron phosphate cathode material A8 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 9**

(1) Substantially same as Example 1, except that the median particle size $D_{50}$ of the slurry was controlled to be 300 nm, to obtain a spray-dried material.
(2) Same as Example 1.
(3) Same as Example 1. A lithium iron phosphate cathode material A9 was obtained. The lithium iron phosphate cathode material A9 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

XRD analysis indicates that for the cathode material A9, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.251. At the same time, a pallet density of the lithium iron phosphate cathode material A9 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 10**

(1) Same as Example 1.
(2) Substantially same as Example 1, except that the sintering temperature was 760°C.
(3) Same as Example 1. A lithium iron phosphate cathode material A10 was obtained. The lithium iron phosphate cathode material A10 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

XRD analysis indicates that for the cathode material A10, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.252. At the same time, a pallet density of the lithium iron phosphate cathode material A10 and the peak intensity $I(2\theta_{A2})$ of the diffraction characteristic peak at $2\theta_{A2}$ measured by XRD of the cathode material satisfied: $PD=0.084\ I(2\theta_{A2}) + 0.377$.

**Example 11**

(1) Same as Example 1.
(2) Substantially same as Example 1, except that the sintering temperature was 780°C.
(3) Same as Example 1. A lithium iron phosphate cathode material A11 was obtained. The lithium iron phosphate cathode material A11 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

XRD analysis indicates that for the cathode material A11, a ratio $I(2\theta_{A2})/I(2\theta_{B3})$ of a peak intensity $I(2\theta_{A2})$ of a

diffraction characteristic peak at $2\theta_{A2}$ to a peak intensity $I(2\theta_{B3})$ of a diffraction characteristic peak at $2\theta_{B3}$ was 0.255. At the same time, a pallet density of the lithium iron phosphate cathode material A11 and the peak intensity $I(2\theta_{A2})$ of the diffraction characteristic peak at $2\theta_{A2}$ measured by XRD of the cathode material satisfied: PD=0.084 $I(2\theta_{A2})$ + 0.377.

**Example 12**

(1) Same as Example 1.
(2) Substantially same as Example 1, except that the calcination temperature was 900°C.
(3) Same as Example 1. A lithium iron phosphate cathode material A12 was obtained. The lithium iron phosphate cathode material A12 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

XRD analysis indicates that for the cathode material A12, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.266. At the same time, a pallet density of the lithium iron phosphate cathode material A12 and the peak intensity $I(2\theta_{A2})$ of the diffraction characteristic peak at $2\theta_{A2}$ measured by XRD of the cathode material satisfied: PD=0.084 $I(2\theta_{A2})$ + 0.377.

**Example 13**

(1) Substantially same as Example 1, except that the iron phosphate precursor P1, lithium carbonate, titanium oxide, and manganese oxide were added according to n(Fe): n(Li): n(Ti): n(Mn)=0.961: 1.04: 0.01: 0.01 and mixed with purified water, to obtain a spray-dried material.
(2) Same as Example 1.
(3) Same as Example 1. A lithium iron phosphate cathode material A13 was obtained. The lithium iron phosphate cathode material A13 included a matrix and a carbon coating layer coated on a surface of the matrix. The matrix had a composition of $Li_{1.04}(Fe_{0.961}Ti_{0.01}Mn_{0.01})(PO_4)_{0.91}(P_2O_7)_{0.045}$.

XRD analysis indicates that for the cathode material A13, a ratio $I(2\theta_{A2})/I(2\theta_{B3})$ of a peak intensity $I(2\theta_{A2})$ of a diffraction characteristic peak at $2\theta_{A2}$ to a peak intensity $I(2\theta_{B3})$ of a diffraction characteristic peak at $2\theta_{B3}$ was 0.254. At the same time, a pallet density of the lithium iron phosphate cathode material A13 and the peak intensity $I(2\theta_{A2})$ of the diffraction characteristic peak at $2\theta_{A2}$ measured by XRD of the cathode material satisfied:

$$PD=0.084\ I(2\theta_{A2}) + 0.377.$$

**Comparative Example 1**

(1) Substantially same as Example 1, except that: the iron phosphate precursor DP1 was adopted to replace the iron phosphate precursor P1; and the iron phosphate precursor DP1, lithium carbonate, and titanium oxide were added according to n(Fe): n(Li): n(Ti)=0.976: 1.04: 0.019 and mixed with purified water, to obtain a spray-dried material.
(2) Same as Example 1.
(3) Same as Example 1. A lithium iron phosphate cathode material D1 was obtained. The lithium iron phosphate cathode material D1 included a matrix and a carbon coating layer coated on a surface of the matrix. The matrix had a composition of $Li_{1.04}(Fe_{0.976}Ti_{0.019})(PO_4)_{0.958}(P_2O_7)_{0.021}$.

XRD analysis indicates that the cathode material D1 had no diffraction characteristic peaks at $2\theta_{A1}$=29.4° to 29.6°, $2\theta_{A2}$=29.8° to 30°, and $2\theta_{A3}$=43.8° to 43.9°.

**Comparative Example 2**

(1) Substantially same as Example 1, except that: the iron phosphate precursor DP2 was adopted to replace the iron phosphate precursor P1; and the iron phosphate precursor DP1, lithium carbonate, and titanium oxide were added according to n(Fe): n(Li): n(Ti)=0.999: 1.04: 0.019 and mixed with purified water, to obtain a spray-dried material.
(2) Same as Example 1.
(3) Same as Example 1. A lithium iron phosphate cathode material D2 was obtained. The lithium iron phosphate cathode material D2 included a matrix and a carbon coating layer coated on a surface of the matrix. The matrix had a composition of $Li_{1.04}(Fe_{0.999}Ti_{0.019})(PO_4)_{0.946}(P_2O_7)_{0.027}$.

XRD analysis indicates that the cathode material D2 had no diffraction characteristic peaks at $2\theta_{A1}=29.4°$ to $29.6°$, $2\theta_{A2}=29.8°$ to $30°$, and $2\theta_{A3}=43.8°$ to $43.9°$.

**Comparative Example 3**

(1) Substantially same as Example 1, except that: the iron phosphate precursor DP3 was adopted to replace the iron phosphate precursor P1; and the iron phosphate precursor DP3, lithium carbonate, and titanium oxide were added according to n(Fe): n(Li): n(Ti)=0.998: 1.04: 0.019 and mixed with purified water, to obtain a spray-dried material.
(2) Same as Example 1.
(3) Same as Example 1. A lithium iron phosphate cathode material D3 was obtained. The lithium iron phosphate cathode material D3 included a matrix and a carbon coating layer coated on a surface of the matrix. The matrix had a composition of $Li_{1.04}(Fe_{0.998}Ti_{0.019})(PO_4)_{0.952}(P_2O_7)_{0.024}$.

XRD analysis indicates that the cathode material D3 had no diffraction characteristic peaks at $2\theta_{A1}=29.4°$ to $29.6°$, $2\theta_{A2}=29.8°$ to $30°$, and $2\theta_{A3}=43.8°$ to $43.9°$.

**Comparative Example 4**

(1) Substantially same as Example 1, except that: the iron phosphate precursor DP1 was adopted to replace the iron phosphate precursor P1; and the iron phosphate precursor DP1, lithium carbonate, and titanium oxide were added according to n(Fe): n(Li): n(Ti)=0.976: 1.04: 0.019 and mixed with purified water, to obtain a spray-dried material.
(2) Substantially same as Example 1, except that the calcination temperature was 795°C.
(3) Same as Example 1. A lithium iron phosphate cathode material D4 was obtained. The lithium iron phosphate cathode material D4 included a matrix and a carbon coating layer coated on a surface of the matrix. The matrix had a composition of $Li_{1.04}(Fe_{0.976}Ti_{0.019})(PO_4)_{0.958}(P_2O_7)_{0.021}$.

XRD analysis indicates that the cathode material D4 had no diffraction characteristic peaks at $2\theta_{A1}=29.4°$ to $29.6°$, $2\theta_{A2}=29.8°$ to $30°$, and $2\theta_{A3}=43.8°$ to $43.9°$.

**Comparative Example 5**

(1) Same as Example 1.
(2) Substantially same as Example 1, except that the calcination temperature was 480°C.
(3) Same as Example 1. A lithium iron phosphate cathode material D5 was obtained. The lithium iron phosphate cathode material D5 included a matrix and a carbon coating layer coated on a surface of the matrix. The matrix had a composition of $Li_{1.04}(Fe_{0.961}Ti_{0.019})(PO_4)_{0.91}(P_2O_7)_{0.045}$.

XRD analysis indicates that the cathode material D5 had no diffraction characteristic peaks at $2\theta_{A1}=29.4°$ to $29.6°$, $2\theta_{A2}=29.8°$ to $30°$, and $2\theta_{A3}=43.8°$ to $43.9°$.
In the examples and comparative examples, the median particle size, specific surface area, bulk density, and moisture content of the spray-dried material are listed in Table 2.

[Table 2]

|  | $D_{50}$ | BET | Bulk density | Moisture |
|---|---|---|---|---|
| Unit | μm | m²/g | g/cm³ | % |
| Example 1 | 23.2 | 11.0 | 0.62 | 2.2 |
| Example 2 | 22.5 | 10.5 | 0.63 | 2.3 |
| Example 3 | 23.3 | 10.8 | 0.60 | 2.3 |
| Example 4 | 22.6 | 12.2 | 0.62 | 2.2 |
| Example 5 | 23.5 | 10.8 | 0.62 | 2.4 |
| Example 6 | 23.6 | 11.5 | 0.59 | 2.0 |
| Example 7 | 22.9 | 12.0 | 0.61 | 2.3 |
| Example 8 | 22.5 | 12.2 | 0.58 | 2.2 |
| Example 9 | 23.8 | 11.5 | 0.59 | 2.4 |
| Example 10 | 23.5 | 11.2 | 0.59 | 2.4 |
| Example 11 | 23 | 11.8 | 0.59 | 2.4 |
| Example 12 | 23.3 | 11.5 | 0.69 | 2.2 |
| Example 13 | 23.3 | 11.6 | 0.62 | 2.2 |
| Comparative Example 1 | 22.3 | 11.5 | 0.62 | 2.1 |
| Comparative Example 2 | 23.0 | 11.1 | 0.60 | 1.9 |
| Comparative Example 3 | 23.8 | 11.5 | 0.61 | 2.3 |
| Comparative Example 4 | 22.2 | 11.8 | 0.58 | 2.4 |
| Comparative Example 5 | 23.3 | 9 | 0.62 | 2.2 |

**Examples**

The physicochemical indicators of the lithium iron phosphate cathode materials are listed in Table 2.

[Table 2 continued]

|  | $D_{50}{}^1$ | PD | Carbon coating layer | BET | Volume resistivity | Content of $Fe_2P$ | $I(2\theta_{A2})/I(2\theta_{B3})$ |
|---|---|---|---|---|---|---|---|
| Unit | μm | g/cm³ | % | m²/g | Ω·cm | ppb |  |
| Example 1 | 1.35 | 2.52 | 1.31 | 11.2 | 20 | 80 | 0.255 |
| Example 2 | 1.33 | 2.63 | 1.33 | 11.3 | 19 | 86 | 0.267 |
| Example 3 | 1.38 | 2.60 | 1.29 | 11.4 | 18 | 85 | 0.264 |
| Example 4 | 1.40 | 2.61 | 1.28 | 11.5 | 21 | 85 | 0.266 |
| Example 5 | 1.38 | 2.52 | 1.29 | 11.3 | 18 | 78 | 0.254 |
| Example 6 | 1.41 | 2.51 | 1.28 | 11.1 | 19 | 76 | 0.253 |
| Example 7 | 1.39 | 2.51 | 1.29 | 11 | 20 | 79 | 0.254 |
| Example 8 | 1.38 | 2.59 | 1.34 | 10.8 | 21 | 82 | 0.25 |
| Example 9 | 1.40 | 2.48 | 1.23 | 12 | 19 | 78 | 0.251 |
| Example 10 | 1.36 | 2.45 | 1.33 | 11.5 | 22 | 71 | 0.252 |
| Example 11 | 1.42 | 2.55 | 1.28 | 11 | 15 | 90 | 0.255 |
| Example 12 | 1.62 | 2.68 | 1.28 | 9.5 | 36 | 2220 | 0.266 |

(continued)

| | $D_{50}$[1] | PD | Carbon coating layer | BET | Volume resistivity | Content of $Fe_2P$ | $I(2\theta_{A2})/I(2\theta_{B3})$ |
|---|---|---|---|---|---|---|---|
| Unit | $\mu m$ | g/cm$^3$ | % | m$^2$/g | $\Omega \cdot cm$ | ppb | |
| Example 13 | 1.33 | 2.50 | 1.28 | 11.5 | 18 | 81 | 0.254 |
| Comparative Example 1 | 1.36 | 2.40 | 1.30 | 11.3 | 22 | 70 | / |
| Comparative Example 2 | 1.35 | 2.42 | 1.30 | 11.5 | 18 | 75 | / |
| Comparative Example 3 | 1.35 | 2.41 | 1.31 | 10.8 | 19 | 66 | / |
| Comparative Example 4 | 1.38 | 2.50 | 1.29 | 11.2 | 9 | 1520 | / |
| Comparative Example 5 | 0.88 | 2.02 | 1.66 | 14.8 | 45 | 20 | / |
| [1] refers to the average particle size of the primary particles. | | | | | | | |

The content of $Fe_2P$, the volume resistivity, and the pallet density of the lithium iron phosphate cathode materials prepared in Example 1 to Example 11, Example 14, Comparative Example 1 to Comparative Example 3, and Comparative Example 5 satisfy: MI=77.13PD-0.03R-107.7.

**Test Examples**

The test examples are intended to explain the electrode materials, the electrodes, and the lithium-ion battery and the preparation method thereof.

(1) Preparation of positive electrode plate: the respective lithium iron phosphate cathode materials prepared in the above-mentioned examples and comparative examples, a conductive agent (carbon nanotube), and a solution of a binder PVDF in NMP were mixed at a mass ratio of 90: 5: 5. Specifically, the dried cathode material and the conductive agent were ground in a mortar for 15 minutes, the PVDF solution (mass fraction 5%) was added in proportion after uniformly grinding, and the mixture was stirred on a magnetic stirrer for 6 hours; and the obtained paste slurry was evenly coated on a current collector (i.e., an aluminum foil) and dried in a vacuum drying oven at 60°C for 20 hours. Then, the coated foil was stamped under a pressure of 100 MPa into a positive electrode plate having a diameter of 12 mm and a thickness of 120 $\mu m$. The positive electrode plate was put into a vacuum drying oven at 120°C and dried for 12 hours.

(2) Assembly of battery: a metal lithium plate having a diameter of 17 mm and a thickness of 1 mm as a negative electrode plate, a polyethylene porous membrane coated with an alumina ceramic layer and having a thickness of 25 $\mu m$ as a separator, a mixture of equivalent amounts of $LiPF_6$ (1mol/L), ethylene carbonate (EC), and diethyl carbonate (DEC) as an electrolyte, and the obtained positive electrode plate were assembled into a 2025 button battery in an argon-filled glove box, which had a water content and an oxygen content that were both smaller than 5 ppm.

(3) Electrochemical performance test: the battery was subjected to a charge and discharge test using a LAND CT2001A charge and discharge instrument from Wuhan Rambo Electronics Co., Ltd. The charge and discharge voltage ranged from 2.5 V to 3.75 V. The specific capacity of the assembled lithium-ion battery was tested at rates of 0.1C and 1C, respectively, and the cycle performance thereof was tested at a rate of 1C. The test results are listed in Table 3.

[Table 3]

| | 0.1C charge specific capacity | 0.1C discharge specific capacity | 0.5C discharge specific capacity | 1C discharge specific capacity | 1C capacity retention rate after 200 cycles | Energy efficiency |
|---|---|---|---|---|---|---|
| Unit | mAh/g | mAh/g | mAh/g | mAh/g | % | % |
| Example 1 | 163.9 | 160.8 | 152.6 | 145.1 | 97.2 | 91.0 |
| Example 2 | 163.5 | 160.4 | 152.3 | 144.9 | 97.8 | 91.5 |

(continued)

| | 0.1C charge specific capacity | 0.1C discharge specific capacity | 0.5C discharge specific capacity | 1C discharge specific capacity | 1C capacity retention rate after 200 cycles | Energy efficiency |
|---|---|---|---|---|---|---|
| Unit | mAh/g | mAh/g | mAh/g | mAh/g | % | % |
| Example 3 | 163.8 | 160.8 | 152.4 | 145.3 | 97.7 | 91.3 |
| Example 4 | 163.5 | 160.6 | 152. | 144.9 | 97.9 | 91.6 |
| Example 5 | 164.0 | 160.8 | 152.7 | 145.3 | 97.5 | 91.1 |
| Example 6 | 163.8 | 160.6 | 152.6 | 145.0 | 97.7 | 91.2 |
| Example 7 | 163.4 | 160.2 | 152.2 | 144.9 | 97.7 | 91.0 |
| Example 8 | 163.5 | 160.8 | 152.5 | 144.9 | 97.2 | 90.7 |
| Example 9 | 163.7 | 160.6 | 152.7 | 145.3 | 97.1 | 91.7 |
| Example 10 | 164.1 | 161.0 | 152.8 | 145.5 | 97.5 | 91.1 |
| Example 11 | 163.3 | 160.2 | 152.2 | 144.8 | 97.2 | 91.5 |
| Example 12 | 160.3 | 150.2 | 148.1 | 132.8 | 96.5 | 90.5 |
| Example 13 | 161.2 | 160.1 | 152.1 | 145.0 | 96.9 | 90.8 |
| Comparative Example 1 | 163.6 | 160.8 | 150.6 | 141.3 | 94.5 | 89.8 |
| Comparative Example 2 | 163.8 | 160.7 | 150.4 | 141.4 | 95.6 | 89.3 |
| Comparative Example 3 | 163.5 | 160.9 | 150.8 | 141.5 | 94.1 | 89.9 |
| Comparative Example 4 | 162.9 | 158.4 | 148.1 | 139.1 | 97.3 | 87.2 |
| Comparative Example 5 | 164.6 | 165.0 | 130.2 | 112.3 | 92.0 | 82.3 |

Table 2 and Table 3 reveal that when the ratio $I(2\theta_{A2})/I(2\theta_{B3})$ of the peak intensity $I(2\theta_{A2})$ of the diffraction characteristic peak at $2\theta_{A2}$ to the peak intensity $I(2\theta_{B3})$ of the diffraction characteristic peak at $2\theta_{B3}$ is greater than or equal to 0.26, the cathode material can exhibit a higher pallet density and better electrochemical performances, while having less content of $Fe_2P$.

FIG. 1 is an XRD pattern of the iron phosphate precursor prepared in Preparation Example 1 of the present disclosure. FIG. 1 shows diffraction characteristic peaks at $2\theta_{a1}$=16.2° to 16.9°, $2\theta_{a2}$=27.3° to 28.1°, $2\theta_{a3}$=29° to 29.7°, and $2\theta_{a4}$=30.2° to 30.9°, indicating that the iron pyrophosphate phase is included in the iron phosphate precursor.

FIG. 2 is an SEM image of the iron phosphate precursor prepared in Preparation Example 1 of the present disclosure. It can be seen from FIG. 2 that the average particle size of the primary particles of the iron phosphate precursor is 150 nm.

FIG. 3 is XRD patterns of lithium iron phosphate cathode materials prepared in Example 1 and Example 2 of the present disclosure. FIG. 3 shows significant diffraction characteristic peaks at $2\theta_{A1}$=29.50°, $2\theta_{A2}$=29.93°, and $2\theta_{A3}$=43.85°, indicating that the lithium iron pyrophosphate phase is included in the cathode material.

FIG. 4 is an SEM image of the lithium iron phosphate cathode material prepared in Example 1 of the present disclosure. The cathode material has a secondary particle structure formed by the primary particles.

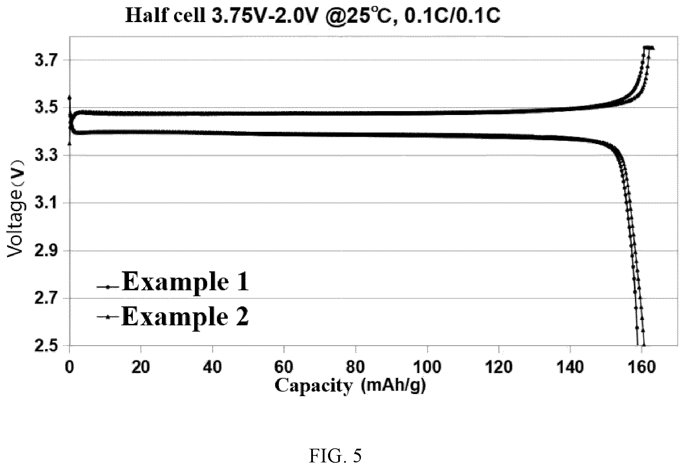

FIG. 5 is a graph illustrating charge and discharge performance of lithium-ion batteries assembled from lithium iron phosphate cathode materials of Example 1 and Example 2. FIG. 5 indicates that Example 2 has higher charge capacity and discharge capacity.

The preferred embodiments of the present disclosure are described in detail above. However, the present disclosure is not limited thereto. Within the scope of technical conception of the present disclosure, a variety of simple variations may be made to the technical solutions of the present disclosure, including the combination of various technical features in any other suitable manner. These simple variations and combinations shall be regarded as the contents disclosed by the present disclosure, and all of them fall within the scope of protection of the present disclosure.

Claims

1. A lithium iron phosphate cathode material, wherein:
   based on X-ray Diffraction (XRD) test, the lithium iron phosphate cathode material has diffraction characteristic peaks at $2\theta_{A1}$=29.4° to 29.6°, $2\theta_{A2}$=29.8° to 30°, and $2\theta_{A3}$=43.8° to 43.9°.

2. The lithium iron phosphate cathode material according to claim 1, wherein:

   based on XRD test, the lithium iron phosphate cathode material has diffraction characteristic peaks at $2\theta_{B1}$=25.4° to 25.5°, $2\theta_{B2}$=35.9° to 36°, and $2\theta_{B3}$=60.7° to 60.8°; and
   preferably, for the lithium iron phosphate cathode material, a ratio of a peak intensity $I(2\theta_{A2})$ of the diffraction characteristic peak at $2\theta_{A2}$ to a peak intensity $I(2\theta_{B3})$ of the diffraction characteristic peak at $2\theta_{B3}$ satisfies $0.25 \leq I(2\theta_{A2})/I(2\theta_{B3}) \leq 0.27$, and preferably, $0.26 \leq I(2\theta_{A2})/I(2\theta_{B3}) \leq 0.27$.

3. The lithium iron phosphate cathode material according to claim 1 or 2, comprising:

   a matrix; and
   a carbon coating layer coated on a surface of the matrix, wherein:

   the matrix has a composition represented by Formula I:

   $$Li_{1+a}Fe_bM_cMn_d(PO_4)_{1-2w}(P_2O_7)_w \qquad \text{Formula I,}$$

   where $-0.1 \leq a \leq 0.1$, $0 \leq b \leq 1$, $0 \leq c \leq 0.5$, $0 \leq d \leq 1$, and $0.03 \leq w \leq 0.09$; and M is selected from at least one of La, Ce, Cr, Mo, Ca, Hf, Ti, Fe, Zn, Y, Zr, W, Nb, Sm, Co, Ni, V, Mg, Na, B, and Al, and preferably, M is selected from at least one of Al, Zr, W, Co, V, and Ti; and
   preferably, based on a total weight of the lithium iron phosphate cathode material, a content of the carbon coating layer ranges from 0.5 wt% to 2wt%, and preferably, from 1 wt% to 1.5 wt%.

4. The lithium iron phosphate cathode material according to any one of claims 1 to 3, wherein:

   the lithium iron phosphate cathode material has a secondary particle structure formed by primary particles, the primary particles having a median particle size $D_{50}$ ranging from 0.2 $\mu$m to 2 $\mu$m;
   preferably, the lithium iron phosphate cathode material has a pallet density ranging from 2.5 g/cm$^3$ to 2.7 g/cm$^3$;
   preferably, the lithium iron phosphate cathode material has a tap density ranging from 0.6 g/cm$^3$ to 1.1 g/cm$^3$;
   preferably, the lithium iron phosphate cathode material has a specific surface area ranging from 8 m$^2$/g to 20 m$^2$/g;
   preferably, the lithium iron phosphate cathode material has a volume resistivity ranging from 1 $\Omega$·cm to 100 $\Omega$·cm; and
   preferably, a content of Fe$_2$P of the lithium iron phosphate cathode material is lower than or equal to 100 ppb.

5. The cathode material according to claim 4, wherein the content of Fe$_2$P, the volume resistivity, and the pallet density of the lithium iron phosphate cathode material satisfy:

   $$MI = 77.13PD - 0.03R - 107.7,$$

   where:

   R represents the volume resistivity of the lithium iron phosphate cathode material in $\Omega$·cm;
   PD represents the pallet density of the lithium iron phosphate cathode material in g/cm$^3$; and
   MI represents the content of Fe$_2$P of the lithium iron phosphate cathode material in ppb,
   preferably, wherein the pallet density of the lithium iron phosphate cathode material and a value of the peak intensity $I(2\theta_{A2})$ of the diffraction characteristic peak at $2\theta_{A2}$ of the lithium iron phosphate cathode material measured by XRD satisfy:

   $$PD = 0.084\ I(2\theta_{A2}) + 0.377,$$

where:

PD represents the pallet density of the lithium iron phosphate cathode material in $g/cm^3$; and $I(2\theta_{A2})$ represents the peak intensity $I(2\theta_{A2})$ of the diffraction characteristic peak at $2\theta_{A2}$ in an XRD diffraction pattern of the lithium iron phosphate cathode material.

6. A preparation method of a lithium iron phosphate cathode material, the preparation method comprising:

(1) mixing an iron phosphate precursor, a lithium source, a carbon source, an optional metal source M, and an optional Mn source with a liquid medium, grinding the mixture into slurry, and drying the slurry, to obtain a dried material;
(2) performing a calcination treatment on the dried material under a protective atmosphere, to obtain a sintered material;
(3) crushing and sieving the sintered material, to obtain the lithium iron phosphate cathode material, wherein:

based on XRD test, the iron phosphate precursor has diffraction characteristic peaks at $2\theta_{a1}$=16.2° to 16.9°, $2\theta_{a2}$=27.3° to 28.1°, $2\theta_{a3}$=29° to 29.7°, and $2\theta_{a4}$=30.2° to 30.9°; and based on XRD test, the iron phosphate precursor has diffraction characteristic peaks at $2\theta_{b1}$=20° to 20.7°, $2\theta_{b2}$=21.5° to 22.2°, $2\theta_{b3}$=23.4° to 24°, and $2\theta_{b4}$=25.5° to 26.2°;
for the iron phosphate precursor, an integral area $A(2\theta_{ai})$ of a diffraction characteristic peak at $2\theta_{ai}$ and an integral area $A(2\theta_{bj})$ of a diffraction characteristic peak at $2\theta_{bj}$ satisfy: $\frac{A(2\theta ai)}{A(2\theta ai)+A(2\theta bj)}=1\%$ to 3%, where i is an integer ranging from 1 to 4, and j is an integer ranging from 1 to 4; and
in step (2), a temperature of the calcination treatment is higher than or equal to 500°C.

7. The preparation method according to claim 6, wherein:

lattice parameters of an a-axis and a c-axis of the iron phosphate precursor measured by XRD satisfy: $2.231 \leq c/a \leq 2.2326$;
preferably, the iron phosphate precursor has a composition represented by Formula II:

$(Fe_{1-y}M_yPO_4)_{1-6x}[Fe_4(P_2O_7)_3]_x$ Formula II, where: $0.01 \leq x \leq 0.02$, $0 \leq y \leq 0.1$, and M is selected from at least one of Al, Mg, Co, Ni, Cu, Zn, Zr, and Ti;
preferably, in the iron phosphate precursor, a molar ratio n(Me)/n(P) of a metal element to element phosphorus ranges from 0.960 to 0.980;
preferably, the iron phosphate precursor has a median particle size $D_{50}$ ranging from 1 μm to 25 μm;
preferably, a size of primary particles of the iron phosphate precursor ranges from 20 nm to 200 nm;
preferably, the iron phosphate precursor has a tap density ranging from 0.8 $g/cm^3$ to 1.3 $g/cm^3$;
preferably, the iron phosphate precursor has a specific surface area ranges from 6 $m^2/g$ to 10 $m^2/g$; and
preferably, a content of sulfur in the iron phosphate precursor is lower than or equal to 400 ppm.

8. The preparation method according to claim 6 or 7, wherein:

in step (2), the temperature of the calcination treatment ranges from 500°C to 900°C, and preferably, from 600°C to 800°C; and
preferably, a duration of the calcination treatment ranges from 4 hours to 20 hours, and preferably, from 6 hours to 15 hours.

9. The preparation method according to any one of claims 6 to 8, wherein:
amounts of the iron phosphate precursor, the lithium source, the metal source M, and the Mn source satisfy:

n(Li): n(Fe): n(M): n(Mn)=1+a: b: c: d, where: $0.1 \leq a \leq 0.1$, $0 \leq b \leq 1$, $0 \leq c \leq 0.5$, and $0 \leq d \leq 1$, and preferably, $-0.05 \leq a \leq 0.05$, $0.5 \leq b \leq 1$, $0.001 \leq c \leq 0.1$, and $0 \leq d \leq 0.5$;
preferably, based on a total mass of the iron phosphate precursor, an amount of the carbon source ranges from 8 wt% to 18 wt%;
preferably, the slurry has a median particle size $D_{50}$ ranging from 50 nm to 2,000 nm;
preferably, the slurry has a solid content ranging from 10 wt% to 70 wt%; and

preferably, the drying is spray drying, and preferably, conditions for the spray drying comprise: an air inlet temperature ranging from 190°C to 280°C and an air outlet temperature ranging from 60°C to 120°C.

10. The preparation method according to any one of claims 6 to 9, wherein:

the metal source M is selected from at least one of oxalates, nitrates, acetates, oxides, hydroxides, carbonates, phosphates, metal clusters, metal complexes, and carboxylates that are capable of providing element M; and preferably, the carbon source is selected from at least one of glucose, sucrose, fructose, cellulose, starch, citric acid, polyacrylic acid, phenolic resin, polyethylene glycol, dopamine, graphene, and carbon nanotubes.

11. A lithium iron phosphate cathode material, prepared by the preparation method according to any one of claims 6 to 10.

12. A lithium-ion battery, comprising the lithium iron phosphate cathode material according to any one of claims 1 to 5 and 11.

FIG. 1

FIG. 2

FIG. 3

FIG. 4

FIG. 5

## INTERNATIONAL SEARCH REPORT

| International application No. |
|---|
| **PCT/CN2023/142497** |

| A. | CLASSIFICATION OF SUBJECT MATTER |
|---|---|

H01M4/58(2010.01)i; H01M4/36(2006.01)i; H01M10/0525(2010.01)i; C01B25/45(2006.01)i

According to International Patent Classification (IPC) or to both national classification and IPC

| B. | FIELDS SEARCHED |
|---|---|

Minimum documentation searched (classification system followed by classification symbols)

IPC:H01M,C01B

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI, ISI Web of science: 正极材料, 磷酸, 焦磷酸, 铁, 锂, 碳, 包覆, X射线衍射, cathode material, phosphate, pyrophosphate, iron, fe, lithium, li, carbon, coat+, XRD

| C. | DOCUMENTS CONSIDERED TO BE RELEVANT |
|---|---|

| Category* | Citation of document, with indication, where appropriate, of the relevant passages | Relevant to claim No. |
|---|---|---|
| E | CN 117303338 A (BOCHUANG HONGYUAN NEW MATERIAL CO., LTD.) 29 December 2023 (2023-12-29) <br> description, embodiment 1, and figure 2 | 1-2, 12 |
| X | CN 102869606 A (SAMSUNG FINE CHEMICALS CO., LTD.) 09 January 2013 (2013-01-09) <br> description, embodiment 3, and figure 7 | 1-5, 12 |
| A | CN 102869606 A (SAMSUNG FINE CHEMICALS CO., LTD.) 09 January 2013 (2013-01-09) <br> description, embodiment 3, and figure 7 | 6-11 |
| X | JP 2011001242 A (ASAHI GLASS CO., LTD.) 06 January 2011 (2011-01-06) <br> description, embodiment 14, and figure 1 | 1-5, 12 |
| A | JP 2011001242 A (ASAHI GLASS CO., LTD.) 06 January 2011 (2011-01-06) <br> description, embodiment 14, and figure 1 | 6-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 September 2024** | **09 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/142497**

### C.    DOCUMENTS CONSIDERED TO BE RELEVANT

| Category* | Citation of document, with indication, where appropriate, of the relevant passages | Relevant to claim No. |
|---|---|---|
| X | 高丽敏 (GAO, Limin). "磷酸铁锂材料的循环特性研究 (STUDY ON CYCLE CHARACTERISTICS OF LiFePO4 MATERIAL)" *中国优秀硕士学位论文全文数据库 工程科技II辑 (Engineering Science & Technology II, China Master's Theses Full-Text Database),* No. 5, 15 May 2012 (2012-05-15), C042-701 section 2.2, and figure 4-2 | 1-5, 12 |
| A | 高丽敏 (GAO, Limin). "磷酸铁锂材料的循环特性研究 (STUDY ON CYCLE CHARACTERISTICS OF LiFePO4 MATERIAL)" *中国优秀硕士学位论文全文数据库 工程科技II辑 (Engineering Science & Technology II, China Master's Theses Full-Text Database),* No. 5, 15 May 2012 (2012-05-15), C042-701 section 2.2, and figure 4-2 | 6-11 |
| X | 易秋菊 (YI, Qiuju). "LiFePO4/C正极材料的熔融法制备及掺杂改性研究 (Fabrication of ion-doped LiFePO4 /carbon composites via the glass-ceramic route)" *中国优秀硕士学位论文全文数据库 工程科技II辑 (Engineering Science & Technology II, China Master's Theses Full-Text Database),* No. 2, 15 February 2013 (2013-02-15), C042-479 section 4.2, and figure 4-8 | 1-5, 12 |
| A | 易秋菊 (YI, Qiuju). "LiFePO4/C正极材料的熔融法制备及掺杂改性研究 (Fabrication of ion-doped LiFePO4 /carbon composites via the glass-ceramic route)" *中国优秀硕士学位论文全文数据库 工程科技II辑 (Engineering Science & Technology II, China Master's Theses Full-Text Database),* No. 2, 15 February 2013 (2013-02-15), C042-479 section 4.2, and figure 4-8 | 6-11 |
| X | YOON Man-Soon et al. "Effect of Synthesizing Method on the Properties of LiFePO4/C Composite for Rechargeable Lithium-Ion Batteries" *Electronic Materials Letters,* Vol. 9, No. 2, 15 March 2013 (2013-03-15), 187-193 abstract, sections 2.2 and 2.4, and figure 4 | 1-12 |

Form PCT/ISA/210 (second sheet) (July 2022)

# EP 4 604 215 A1

## INTERNATIONAL SEARCH REPORT
### Information on patent family members

International application No.

**PCT/CN2023/142497**

| Patent document cited in search report | | | Publication date (day/month/year) | Patent family member(s) | | | Publication date (day/month/year) |
|---|---|---|---|---|---|---|---|
| CN | 117303338 | A | 29 December 2023 | None | | | |
| CN | 102869606 | A | 09 January 2013 | CA | 2797831 | A1 | 03 November 2011 |
| | | | | CA | 2797831 | C | 12 June 2018 |
| | | | | JP | 2013530112 | A | 25 July 2013 |
| | | | | JP | 5796260 | B2 | 21 October 2015 |
| | | | | EP | 2565158 | A2 | 06 March 2013 |
| | | | | EP | 2565158 | A4 | 13 April 2016 |
| | | | | EP | 2565158 | B1 | 31 July 2019 |
| | | | | KR | 20110121272 | A | 07 November 2011 |
| | | | | KR | 101698762 | B1 | 23 January 2017 |
| | | | | WO | 2011136497 | A2 | 03 November 2011 |
| | | | | WO | 2011136497 | A9 | 29 December 2011 |
| | | | | WO | 2011136497 | A3 | 01 March 2012 |
| | | | | US | 2013045153 | A1 | 21 February 2013 |
| | | | | US | 9537149 | B2 | 03 January 2017 |
| | | | | CN | 102869606 | B | 02 March 2016 |
| JP | 2011001242 | A | 06 January 2011 | None | | | |

Form PCT/ISA/210 (patent family annex) (July 2022)

**REFERENCES CITED IN THE DESCRIPTION**

**Patent documents cited in the description**

- CN 116553507 A

- CN 112408351 A